# EUROPÄISCHE PATENTSCHRIFT

(11) **EP 1 359 091 B1**
(45) Veröffentlichungstag und Bekanntmachung des Hinweises auf die Patenterteilung: **26.12.2007**
(21) Anmeldenummer: 03008393.5
(22) Anmeldetag: 11.04.2003
(51) Int. Cl.: B64D 1/08, B64D 1/14, B64D 17/74

(54) **Lastenabsetz-System mit einem Lastenschirm**
Load dropping system with parachute
Système de largage de charges avec parachute

(30) Priorität: 03.05.2002 DE 10219952; 05.09.2002 DE 10241584; 31.01.2003 DE 10303788
(43) Veröffentlichungstag der Anmeldung: 05.11.2003
(73) Patentinhaber: EADS Deutschland GmbH, 85521 Ottobrunn (DE)
(72) Erfinder: Christof, Horst, 85653 Aying (DE)

(56) Entgegenhaltungen:
- FR-A- 1 047 735
- GB-A- 1 281 903
- US-A- 3 396 924
- US-A- 3 642 235
- US-A- 3 724 788

## Beschreibung

Die Erfindung betrifft ein Lastenabsetz-System mit einem Lastenschirm zum Absetzen einer Last aus einem Flugzeug sowie ein Verfahren zur Stabilisierung eines Lastenabsetz-Systems mit einem Lastenschirm nach dem Absetzen aus dem Flugzeug.

Aus dem allgemeinen Stand der Technik sind Hilfsschirme bekannt, mit denen in der Luft abgeworfene Lasten in der Luft stabilisiert werden.

Die US 3,642,235 beschreibt eine Vorrichtung zum Absetzen einer Last aus einem Flugzeug. Zunächst wird die Last mittels eines Ausziehschirms in horizontaler Richtung aus dem Flugzeug gezogen. In der Ausziehpase, während der die Last die Absetzterampe des Flugzeugs noch nicht vollständig verlassen hat, ist ein Stabilisierungsgurt am Ausziehstrang des Ausziehschirms mit der Last verbunden. Sobald die Last die Absetzrampe des Flugzeugs verlassen hat, wird der Ausziehstrang von der Last gelöst und der Hauptfallschirm wird unter Einsatz der Luftkräfte des Ausziehschirms ausgelöst.

Es ist daher die Aufgabe der Erfindung, ein Verfahren bereit zu stellen, mit dem die bisherigen Verfahren verbessert werden. Insbesondere sollte eine verbesserte Stabilisierung der Last in einer frühen Phase des Absetzvorgangs vor dem Auslösen des Hauptfallschirms erreicht werden. Weiterhin ist es die Aufgabe der Erfindung, eine entsprechende Vorrichtung und ein Lastenabsetz-System zur Durchführung dieses Verfahrens bereitzustellen.

Diese Aufgabe wird mit den Merkmalen der unabhängigen Patentansprüche gelöst. Weitere Ausführungsformen sind in den auf diese rückbezogenen Unteransprüchen angegeben.

Erfindungsgemäß ist ein Lastenabsetz-System mit einer Last oder einer Lastaufnahme-Vorrichtung, mit einem Lastenschirm und mit einem Hilfsschirm, der mittels zumindest eines Ausziehstranges den Hilfsschirm mit dem Lastengleitschirm verbindet, wobei ein Stabilisierungs-Geschirr zur Verbindung einer Verbindungsstelle des Ausziehstranges mit einem Befestigungsmittel an der Last oder der Lastaufnahme-Vorrichtung verbunden ist, um im gespanntem Zustand die Last in einer vorbestimmten Lage relativ zum durch die Luftkräfte ausgezogenen Ausziehstrang zu stabilisieren und den Winkel, der durch die vertikale Achse der Last relativ zur Längserstreckung des aufgrund der Luftkräfte nach dem Absetzen ausgezogenen Ausziehstranges auftritt, in einem vorbestimmten Winkelbereich zu halten, wobei eine erste Auslöse-Einrichtung zur Lösung des Stabilisierungs-Geschirrs vorgesehen ist und wobei eine zweite Auslöse-Einrichtung zur Freigabe des Lastenschirms von der Last vorgesehen ist, so dass die Last an einer Aufhänge-Vorrichtung am Lastenschirm hängt.

Die erste und die zweite Auslöse-Einrichtung kann durch das Erreichen einer vorbestimmten Zugspannung im Ausziehstrang aktiviert und über Zeitverzögerungs-Einrichtungen betätigt werden. Die Zeitverzögerungs-Einrichtung der ersten Auslöse-Einrichtung kann derart eingestellt sein, dass das Lösen des Stabilisierungs-Geschirrs in einem Zeitintervall zwischen 2 und 6 Sekunden nach dem Auftreten der vorbestimmten Zugspannung in dem Auszieh-Strang erfolgt. Die Zeitverzögerungs-Einrichtung der zweiten Auslöse-Einrichtung kann derart eingestellt sein, dass das Öffnen des Gleitschirmes in einem Zeitintervall zwischen 3 und 12 Sekunden nach dem Auftreten der vorbestimmten Zugspannung in dem Auszieh-Strang erfolgt. Mittels einer Entkoppelungs-Einrichtung, die mit einem mit einem Flugzeug-Rumpfteil in Verbindung stehenden Entkopplungsstrang zusammenwirkt und eine Stelle des Ausziehstranges lösbar an die Last ankoppelt, kann das Stabilisierungs-Geschirr in einem entspannten Zustand gehalten werden, wobei durch Lösen des Entkopplungs-Stranges von der Last der Ausziehstrang an seiner Befestigungsstelle freigegeben wird, so dass aufgrund der Luftkräfte das Stabilisierungs-Geschirr zusammen mit dem gesamten Ausziehstrang in einen gespannten Zustand gelangt.

Weiterhin kann vorgesehen sein, dass die Steuereinheit lösbar an der Last oder der Lastaufnahme-Vorrichtung und eine weitere Auslöse-Einrichtung zur Freigabe von Befestigungsmitteln angeordnet sind, um das Lösen der Steuereinheit zu bewirken, wodurch die Last über eine entsprechende Aufhänge-Vorrichtung an der Steuereinheit hängt.

Nach dem erfindungsgemäßen Verfahren zum Stabilisieren eines aus einem Flugzeug abzusetzenden Lastenabsetz-Systems mit einer Last oder einer Lastaufnahme-Vorrichtung, mit einem Lastenschirm und mit einem Hilfsschirm, der mittels zumindest eines Ausziehstranges den Hilfsschirm mit dem Lastengleitschirm verbindet, ist vorgesehen,
- dass ein Hilfsschirm aus dem Flugzeug abgesetzt wird,
- dass eine erste Auslöse-Einrichtung betätigt wird, um ein mit dem Ausziehstranges in Verbindung stehendes Stabilisierungs-Geschirr unter dem Einfluss der Luftkräfte in einem gespannten Zustand zu bringen,
- dass eine zweite Auslöse-Einrichtung betätigt wird, um die Entfernung des gepackten Lastenschirms von der Last zu bewirken, so dass die Last an einer Aufhänge-Vorrichtung am Lastenschirm hängt.
Im folgenden wird die Erfindung anhand der beiliegenden Figur beschrieben, die zeigen:
- Figur 1a eine schematische Darstellung einer Ausführungsform des erfindungsgemäßen Lastenabsetz-Systems noch in einem Flugzeug, also vor dem Absetzen aus diesem, wobei das dargestellte Lastenabsetz-System einen Hilfsschirm und einen Lastenschirm aufweist,
- Figur 1b eine schematische Darstellung einer weiteren Ausführungsform des erfindungsgemäßen Lastenabsetz-Systems vor dem Absetzen aus dem Flugzeug, wobei das dargestellte Lastenabsetz-System einen ersten Hilfsschirm, einen weiteren Hilfsschirm und einen Lastenschirm aufweist,
- Figur 2a das Lastenabsetz-System nach der Figur 1a kurz nach dem Absetzen aus dem Flugzeug, wobei der Hilfsschirm bereits geöffnet ist und eine Entkopplungs-Einrichtung zur Freigabe des Stabilisierungs-Geschirrs mittels eines Entkopplungs-Stranges noch nicht betätigt ist,
- Figur 2b das Lastenabsetz-System nach der Figur 1b kurz nach dem Absetzen aus dem Flugzeug, wobei der erste Hilfsschirm bereits geöffnet ist und eine Entkopplungs-Einrichtung zur Freigabe des zweiten Hilfsschirmes und des Stabilisierungs-Geschirrs mittels eines Entkopplungs-Stranges noch nicht betätigt ist,
- Figur 3a das Lastenabsetz-System nach der Figur 1a in einer Phase, in der der Hilfsschirm geöffnet ist und die Entkopplungs-Einrichtung zur Freigabe des Stabilisierungs-Geschirrs mittels des Entkopplungs-Stranges betätigt ist,
- Figur 3b das Lastenabsetz-System nach der Figur 1b in einer Phase, in der der erste Hilfsschirm geöffnet ist und die Entkopplungs-Einrichtung zur Freigabe des Stabilisierungs-Geschirrs mittels des Entkopplungs-Stranges betätigt ist, so dass auch der weitere Hilfsschirm von der Last gelöst ist,
- Figur 4 das Lastenabsetz-System nach der Figur 1b in einer auf die Phase nach der Figur 3b folgenden Phase, in der der erste Hilfsschirm aufgrund der Luftkräfte von dem zweiten Hilfsschirm gelöst ist,
- Figur 5a das Lastenabsetz-System nach der Figur 1a in einer Phase, in der der Hilfsschirm geöffnet ist und das Stabilisierungs-Geschirr die Last stabilisiert,
- Figur 5b das Lastenabsetz-System nach der Figur 1 b in einer Phase, in der der zweite Hilfsschirm geöffnet ist und das Stabilisierungs-Geschirr die Last stabilisiert,
- Figur 6a das Lastenabsetz-System nach der Figur 1a in einer Phase, in der das Stabilisierungs-Geschirr durch Betätigung einer ersten Auslöse-Einrichtung gelöst ist,
- Figur 6b das Lastenabsetz-System nach der Figur 1b in einer Phase, in der durch Betätigung einer ersten Auslöse-Einrichtung das Stabilisierungs-Geschirr und eine weitere Aufhänge-Vorrichtung gelöst ist, so dass sich die Steuereinheit von der Last entfernt,
- Figur 7a das Lastenabsetz-System nach der Figur 1a in einer weiteren Phase, in der das Stabilisierungs-Geschirr durch Betätigung einer ersten Auslöse-Einrichtung gelöst ist, wobei eine Ausführungsform des Lastenabsetz-Systems gezeigt ist, bei dem die Steuereinheit nach dem Betätigen der ersten Auslöse-Einrichtung an der Last verbleibt,
- Figur 7b das Lastenabsetz-System nach der Figur 1b in einer weiteren Phase, in der das Stabilisierungs-Geschirr durch Betätigung einer ersten Auslöse-Einrichtung gelöst ist, wobei eine Ausführungsform des Lastenabsetz-Systems gezeigt ist, bei dem die Steuereinheit nach dem Betätigen der ersten Auslöse-Einrichtung von der Last mittels einer Last-Aufhängevorrichtung beabstandet ist,
- Figur 8a das Lastenabsetz-System nach der Figur 1a bzw. 7a in einer Ausführungsform, bei dem die Steuereinheit nach dem Betätigen der ersten Auslöse-Einrichtung an der Last verbleibt, und in einer weiteren Phase, in der durch Betätigung einer zweiten Auslöse-Einrichtung der Lastenschirm von der Last freigegeben wird und dabei ist, sich zu öffnen,
- Figur 8b das Lastenabsetz-System nach der Figur 1b bzw. 7b in einer Ausführungsform, bei dem die Steuereinheit nach dem Betätigen der ersten Auslöse-Einrichtung von der Last entfernt an einer Last-Aufhänge-Vorrichtung hängt, und in einer weiteren Phase, in der durch Betätigung einer zweiten Auslöse-Einrichtung der Lastenschirm von der Last freigegeben wird und dabei ist, sich zu Öffnen,
- Figur 9a das Lastenabsetz-System nach der Figur 1a bzw. 7a in einer weiteren Phase, in der durch Betätigung einer zweiten Auslöse-Einrichtung der Lastenschirm geöffnet ist,
- Figur 9b das Lastenabsetz-System nach der Figur 1b bzw. 7b in einer weiteren Phase, in der durch Betätigung einer zweiten Auslöse-Einrichtung der Lastenschirm geöffnet ist, wobei ein Öffnungs-Aktuator in Form einer toten Schlaufe an der Aufhänge-Vorrichtung des Lastenschirms noch nicht betätigt ist, so dass sich der Lastenschirm in einer Öffnungsstellung befindet,

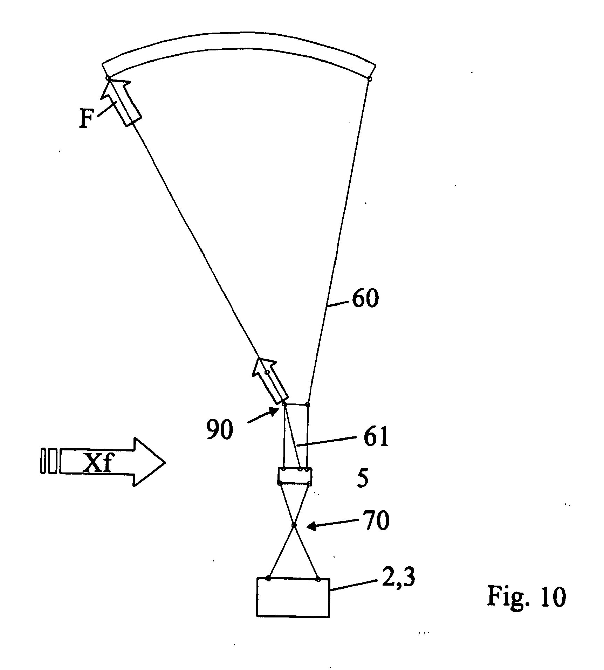

- Figur 10 das Lastenabsetz-System nach der Figur 1b bzw. 7b in einer weiteren Phase, in der der Öffnungs-Aktuator betätigt worden ist, so dass der Lastenschirm von der Füllstellung in die Gleitstellung gebracht worden ist,
- Figur 11a das Lastenabsetz-System nach der Figur 1a bzw. 7a in einer weiteren Phase, in der vor der Landung durch Betätigung einer Aktuatorik unter Ausnutzung der Schirmauftriebskraft mit Schirmanhebung ein Flare durchgeführt wird,

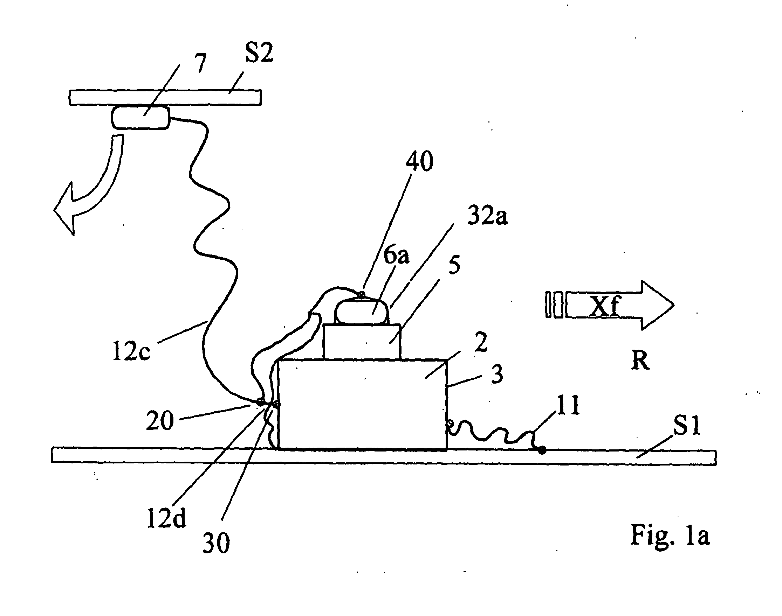

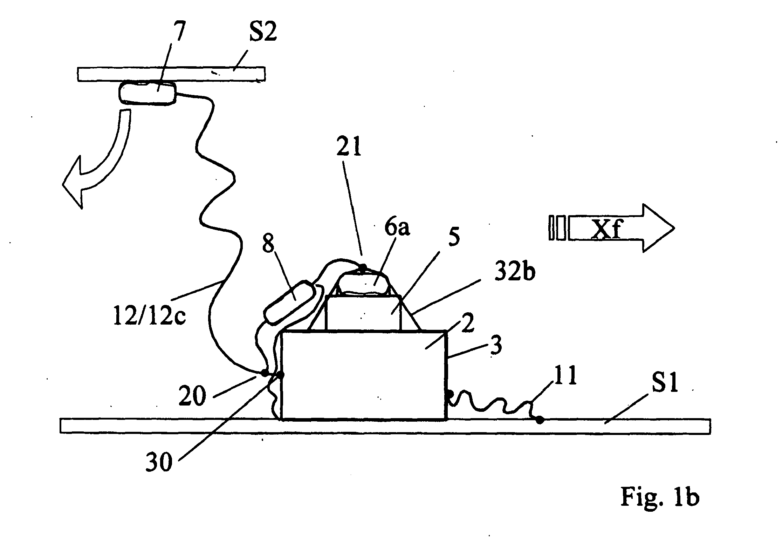

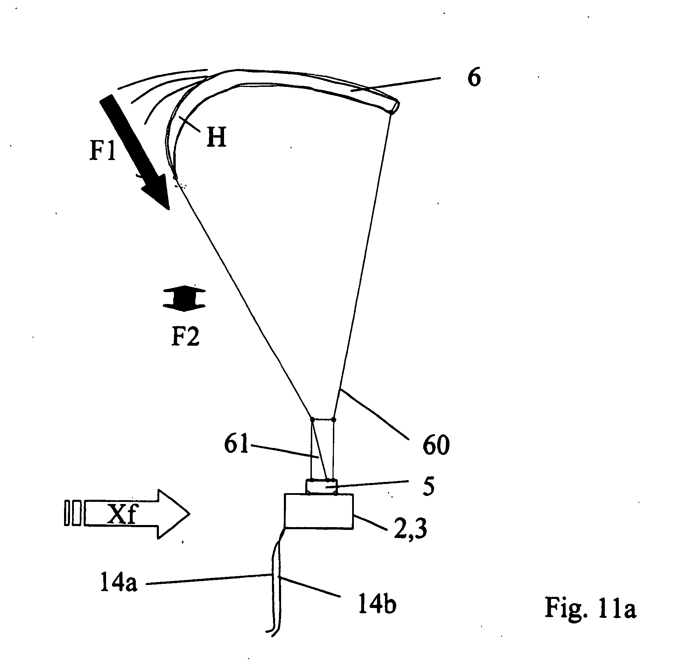

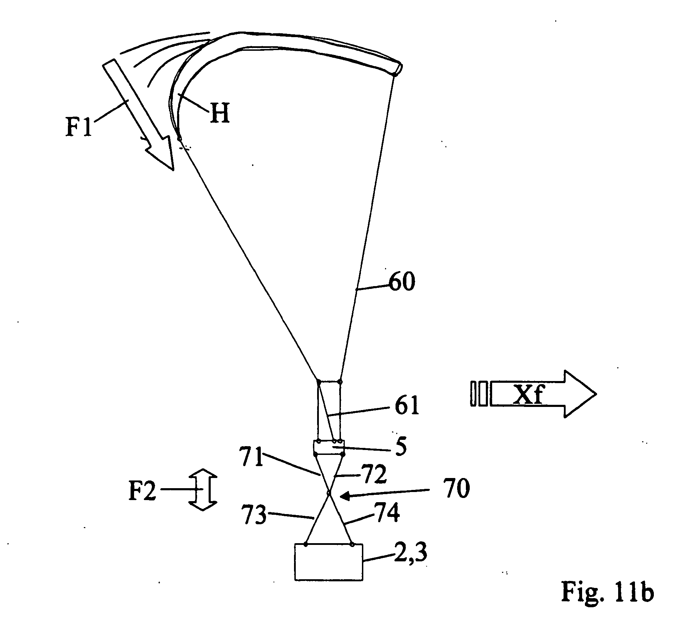

- Figur 11 b das Lastenabsetz-System nach der Figur 1 b bzw. 7b in einer weiteren Phase, in der vor der Landung durch Betätigung einer Aktuatorik unter Ausnutzung der Gewichtskraft der Last ein Flare durchgeführt wird,

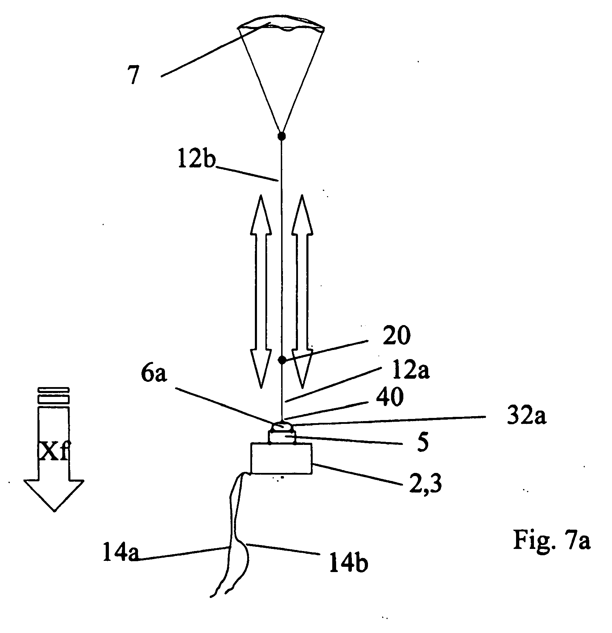

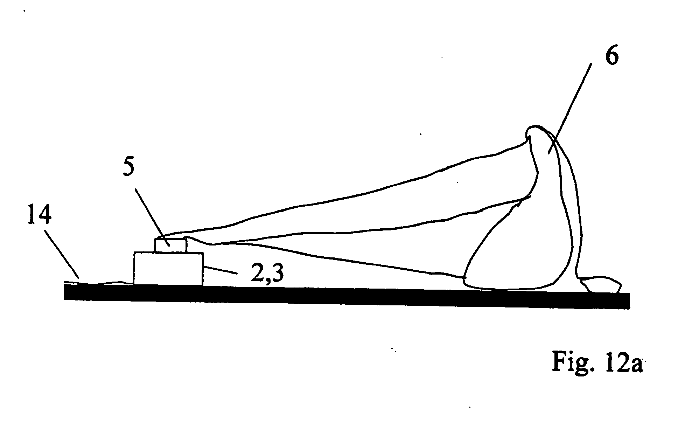

- Figur 12a das Lastenabsetz-System nach der Figur 1a bzw. 7a nach der Landung desselben,

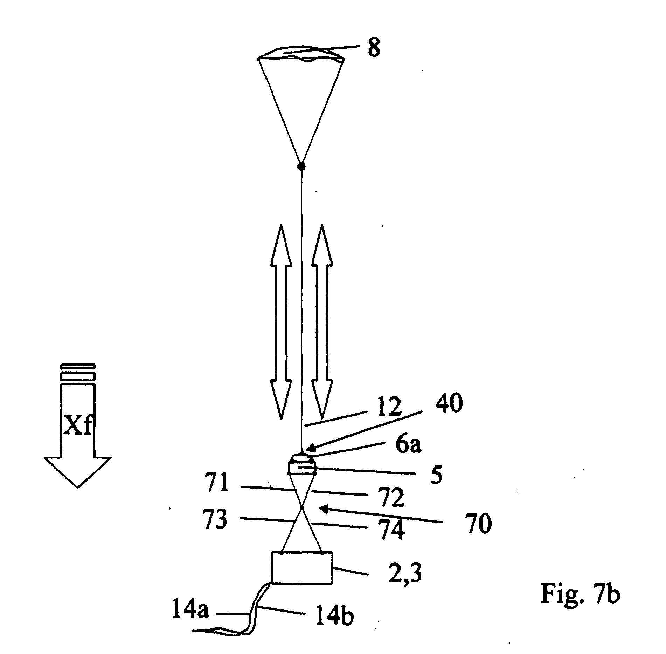

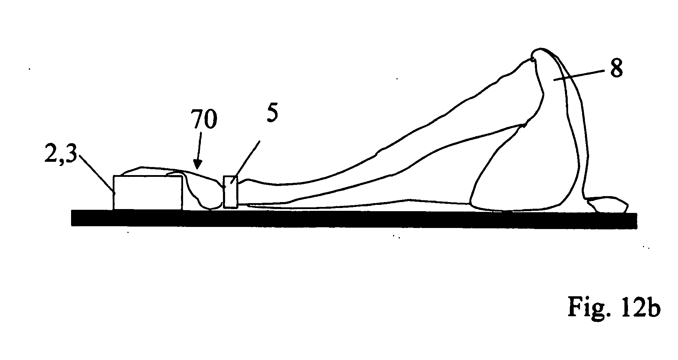

- Figur 12b das Lastenabsetz-System nach der Figur 1b bzw. 7b nach der Landung desselben.

Das in den Figuren dargestellte Lastenabsetz-System 1 umfasst eine zu transportierende Last 2 und optional eine Lastenaufnahme-Vorrichtung 3 zur Aufnahme derselben, optional eine Steuereinheit oder Steuerbox 5, zumindest einen Lastenschirm 6, der als Gleitschirm oder als Fallschirm gestaltet sein kann und im folgenden auch kurz Gleitschirm genannt wird, und zumindest einen Hilfs- oder Bremsschirm 7, wobei der Lastenschirm oder der Gleitschirm 6 an dem Hilfsschirm 7 hängt. Optional kann in einer weiteren Ausführungsform der Erfindung zusätzlich ein weiterer Hilfsschirm 8 vorgesehen sein, der gegebenenfalls an dem (ersten) Hilfs- oder Bremsschirm 7 hängt (Figur 1b). In der weiteren Ausführungsform hat der Hilfsschirm 8 im wesentlichen die Funktion eines Ausziehschirms, auch Drogue genannt. In einer Ausführungsform der Erfindung, in der ein weiterer Hilfsschirm 8 fehlt, übernimmt der dann einzige Hilfsschirm 7 die Funktion sowohl eines Ausziehschirms als auch eines Brems- und Stabilisierungsschirms in einer nachfolgenden Absetzphase. Die Figur 1a zeigt eine Ausführungsform des erfindungsgemäßen Lastenabsetz-Systems 1, bei der nicht ein eigener Ausziehschirm und ein eigener Bremsschirm, sondern lediglich ein Hilfsschirm 7 gezeigt ist, der sowohl die Funktion eines Ausziehschirms und eines Bremsschirms übernimmt. In der Figur 1b ist eine Ausführungsform des erfindungsgemäßen Lastenabsetz-Systems 1 mit einem ersten Hilfsschirm 7 und einem weiteren Hilfsschirm 8 oder einem eigenen Ausziehschirm 8, der also neben dem ersten Hilfsschirm 6 vorgesehen ist. In dieser Ausführungsform hat der erste Hilfsschirm 7 im wesentlichen die Funktion eines Ausziehschirms und der zweite Hilfsschirm 8 im wesentlichen die Funktion eines Brems- und StabilisierungsSchirms. Grundsätzlich können über diese Bestandteile des erfindungsgemäßen Lastenabsetz-Systems 1 noch weitere Hilfsschirme vorgesehen sein. Insbesondere kann ein Hilfsschirm 7 bzw. 8 oder auch ein Lastenschirm 6 auch mehrere Schirme, also ein Schirmsystem umfassen. Im folgenden wird nur von einem Schirm, also einem Hilfsschirm 7 oder 8 oder einem Lastenschirm 6 gesprochen, wobei immer auch jeweils ein Schirmsystem oder eine Anordnung aus mehreren Schirmen gemeint sein kann. Die bei jeweils mehreren Schirmen auftretenden mehreren Verbindungsstränge können dann den vorgesehenen Befestigungsstellen oder and anderen Stellen zusammengekoppelt sein.

Im folgenden wird von einer dreistufigen Ausführungsform des erfindungsgemäßen Lastenabsetz-Systems 1 Bezug genommen, wenn ein weiterer Hilfsschirm 8 oder eine weitere Hilfsschirm-Anordnung 8 vorgesehen ist, während von einer zweistufigen Ausführungsform Bezug genommen wird, wenn dieser bzw. diese nicht vorgesehen ist.

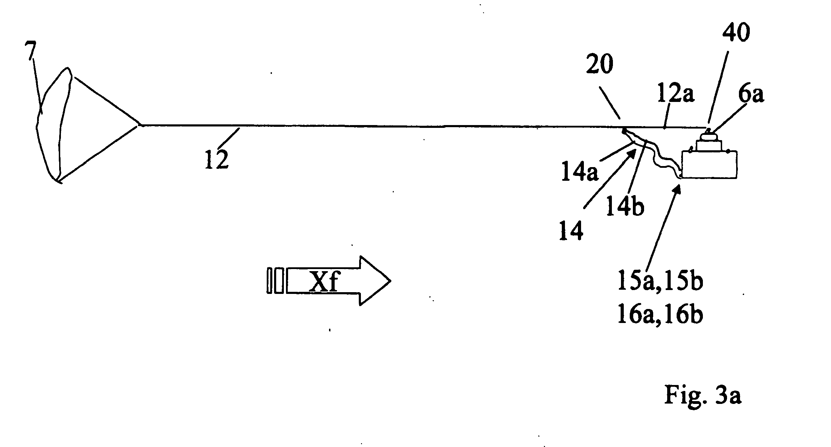

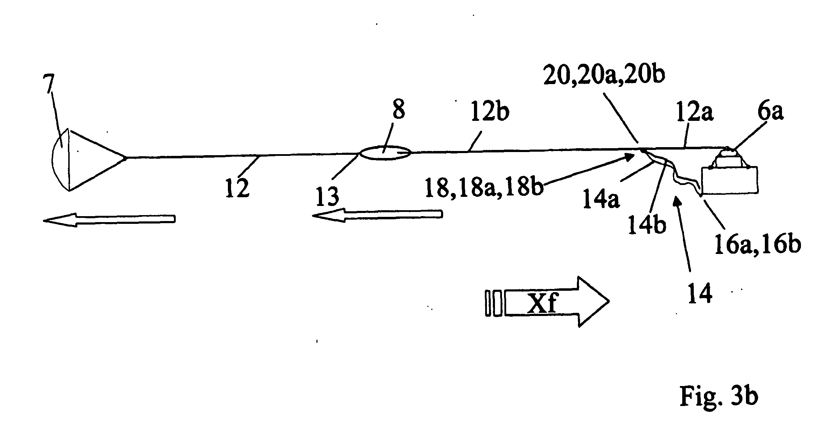

Erfindungsgemäß können auch mehr als der Stufen verwendet werden. Dann würden mehrere erste Hilfsschirme oder Hilfsschirm-Anordnungen 7 (vgl. Figur 3) verwendet werden.

Die Steuereinheit 5 kann eine Aktuatorik zur Steuerung des Gleitschirms über die Steuerleinen sowie ein Navigations- und Führungssystem und ein Missionsplanungssystem umfassen, wobei das Missionsplanungssystem eine Soll-Flugbahn ermittelt und an das Navigations- und Führungssystem weitergibt, und wobei das Navigations- und Führungssystem eine Sensorik zur Ist-Position und Funktionen zur Ermittlung der momentanen Abweichung des Gleitschirmsystems von der Sollfugbahn sowie zur Bestimmung von Steuerkommandos umfasst, die über Signalleitungen an die Aktuatorik zur Minimierung der Abweichung des Gleitschirmsystems vom Sollflugpfad übermittelt werden.

An der Last 2 bzw. der Lastaufnahme-Vorrichtung 3 kann vor dem Abwurf eine mit der Struktur, z.B. der Abwurframpe oder einer Klappe oder dem Boden oder einem Strukturteil S1 des Laderaums R, verbundener Entriegelungsstrang 11 vorgesehen sein.

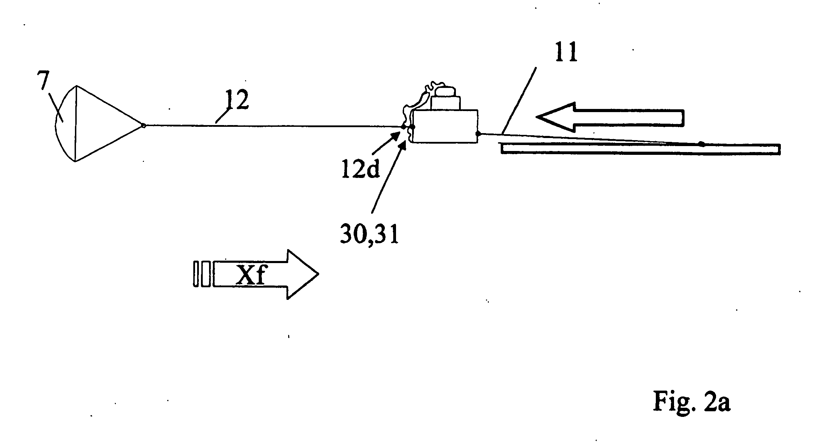

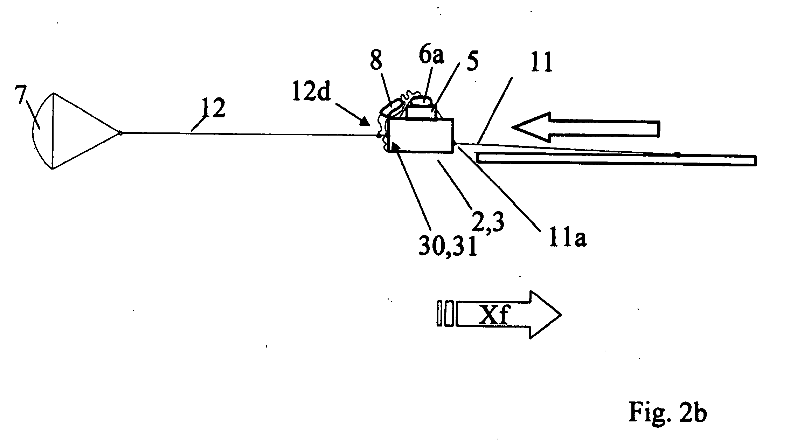

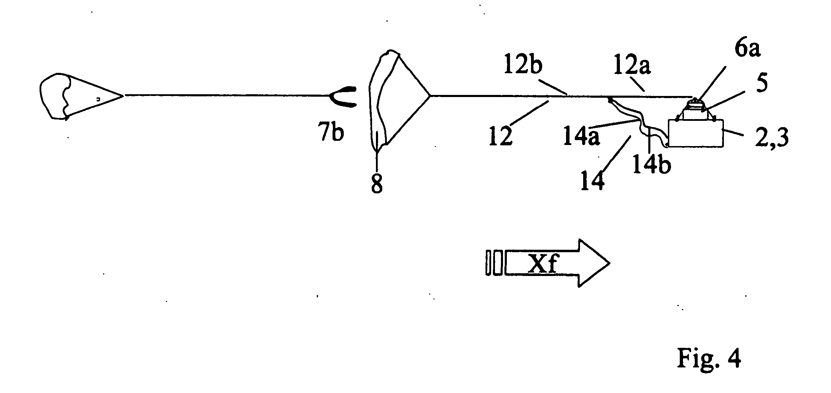

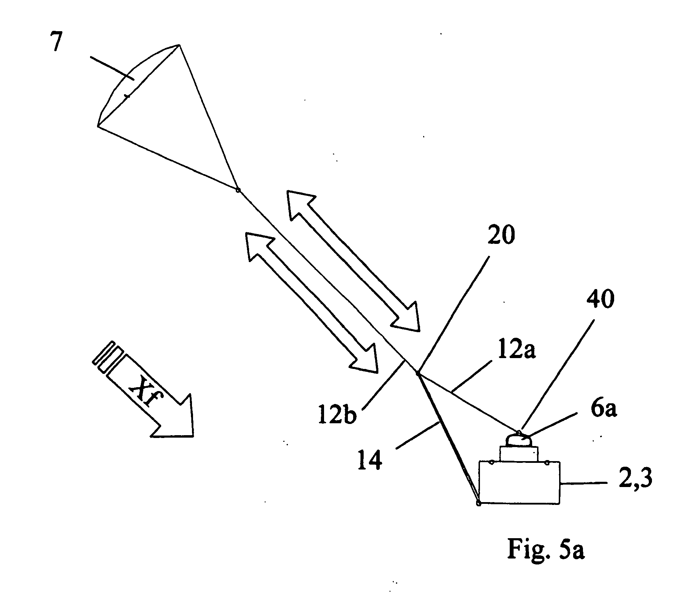

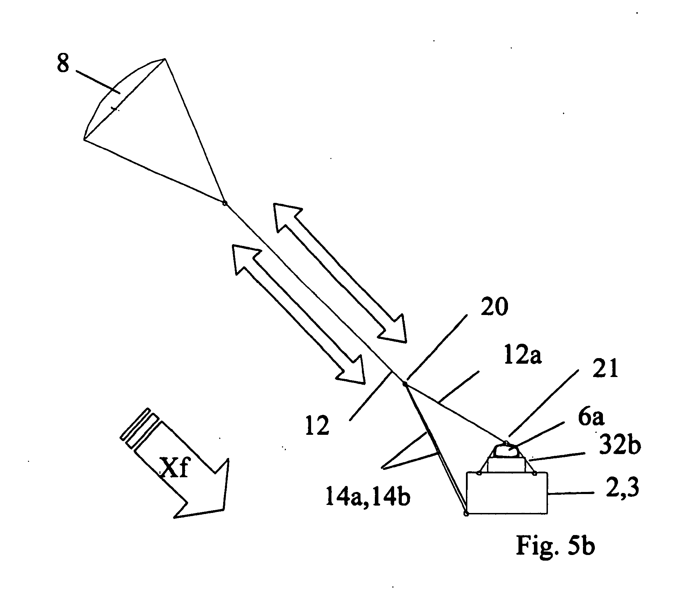

Der Hilfsschirm 7 steht gegebenenfalls über den zweiten Hilfsschirm 8 mittels eines Ausziehstranges 12 mit dem Lastenschirm 6 in Verbindung. Der Ausziehstrang 12 kann einteilig oder mehrteilig gebildet sein. Weiterhin umfasst das Lastenabsetz-System 1 ein Stabilisierungsgeschirr 14 in Form zumindest eines Stabilisierungsstrangs 14, das in Verbindung mit dem Ausziehstrang 12 eine vorbestimmte Lage des Lastengleitschirms in der in der Figur 5a bzw. 5b dargestellten Flugphase sicherstellt. In den Figuren 2a und 2b ist jeweils eine Ausführungsform des Lastenabsetz-Systems 1 mit zwei Stabilisierungssträngen 14a, 14b vorgesehen, die in Ausübung ihrer Stabilisierungsfunktion unterhalb des Ausziehstranges 12 gelegen sind (Figuren 3a, 3b, 4). Das Stabilisierungsgeschirr 14 ist oder die zwei Stabilisierungsstränge 14a, 14b sind mit ihrem ersten Ende 15a bzw. 15b an geeigneten Befestigungsmitteln 16a, 16b an der Last 2 oder der Lastaufnahme-Vorrichtung 3 und mit ihrem zweiten Ende 18a, 18b an einem oder mehreren Befestigungsmitteln oder Verbindungsstellen 20 bzw. 20a, 20b an dem Ausziehstrang 12 befestigt.

Das Stabilisierungsgeschirr kann erfindungsgemäß auf andere Weise angeordnet sein. Wesentlich ist, dass es zusammen mit dem Ausziehstrang 12 die durch die Luftkräfte an der Last 2 oder der Lastaufnahme-Vorrichtung 3 auftretenden Drehmomente aufnimmt. Da der Ausziehstrang 12 über den gepackten Lastenschirm 6a mit der Steuereinheit 5 und / oder mit der Last 2 oder der Lastaufnahme-Vorrichtung 3 verbunden ist, hängt der funktionsgemäß mögliche Ort der Befestigungsstelle des Stabilisierungs-Geschirrs 14 von dem Ort ab, an dem die im Flug von dem Ausziehstrang 12 auf die Last 2 oder die Lastaufnahme-Vorrichtung 3 ausgeübte Zugkraft angreift. Wenn dieser Angriffspunkt beispielsweise an der Unterseite der Last 2 oder der Lastaufnahme-Vorrichtung 3 (etwa an der Stelle 16) gelegen ist, ist es vorteilhaft, das Stabilisierungs-Geschirr 14 oberhalb dieser Stelle anzukoppeln. Aus diesem Beispiel geht hervor, dass der Angriffspunkt des Ausziehstranges 12 und somit auch die Position des gepackten Lastenschirms 6a in der in der Figur 4a bzw. 4b dargestellten Absetzphase auch in Flugrichtung XF gesehen an der Vorderseite des Last oder der Lastaufnahme-Vorrichtung 3 angeordnet sein kann.

Vorteilhafterweise wird die Last 2 über eine Dreipunktaufhängung stabilisiert. Dies kann, wie es in den Ausführungsformen gemäß der Figuren dargestellt ist, mittels zwei Stabilisierungs-Strängen 14a, 14b und einem Teilstück 12a des Ausziehstranges 12 erreicht werden. Es wäre jedoch auch denkbar, dies mit einem Stabilisierungs-Strang 14 und zweier Zweige des Ausziehstranges 12 zu bewerkstelligen, die entweder direkt von einem der Hilfsschirme 7, 8 oder von dem einen Hilfsschirm 7 aus verlaufen oder von einem von diesen bzw. diesem abgezweigten Ausziehstrang 12 abgezweigt sind.

Ein Strang, also z.B. ein Ausziehstrang oder ein Stabilisierungsstrang kann auf verschiedene Weise nach dem Stand der Technik, z.B. als Schnur oder Gurt, realisiert sein.

Die Verbindung des Stabilisierungsgeschirrs 14 mit dem Ausziehstrang 12 kann über eine gemeinsame Karabiner-Verbindung oder auf andere Weise erfolgen. Die Verbindungsstelle kann direkt an dem Ausziehstrang 12 vorliegen oder an einem vom Ausziehstrang 12 abgezweigten Verbindungsstück realisiert sein. Im folgenden wird auf ein einzelnes Befestigungsmittel 18 Bezug genommen. Die Verbindung des Ausziehstranges 12 von dem Befestigungsmittel 18 zum Lastenschirm 6 wird durch einen Abschnitt 12a gebildet, der ebenfalls in zumindest einer Absetzphase zur Stabilisierung der Last in einer vorbestimmten Position mitwirkt. Dabei kann der Abschnitt 12a zusammen mit einem Abschnitt 12b, der von der Verbindungsstelle 18 zum Hilfsschirm 7 bzw. 8 hinführt, einteilig oder zweiteilig ausgebildet sein.

In der dargestellten Ausführungsform des erfindungsgemäßen Lastenabsetz-Systems ist eine Verbindungsstelle des Ausziehstranges 12; 12a, 12b mit dem Verbindungsglied 12d verbunden, das lösbar an der Last 2 oder der Lastaufnahme-Vorrichtung 3 angekoppelt ist. Diese Verbindungsstelle kann von der Befestigungsstelle 18 für das Stabilisierungs-Geschirr 14 verschieden sein.

Zur Lösung des Stabilisierungsgeschirrs 14 oder der Stabilisierungs-Stränge 14a, 14b von dem Ausziehstrang 12 oder / und von der Last 2 bzw. der Lastaufnahme-Vorrichtung 3 ist eine Auslöse-Einrichtung 20 vorgesehen. Diese kann beispielsweise an der Verbindungsstelle 18 bzw. 18a, 18b oder an den Verbindungsstellen 14a, 14b oder dazwischen an den Stabilisierungssträngen angeordnet sein.

Ein Abschnitt des Ausziehstranges 12, der in der in den Figuren 2a bzw. 2b gezeigten Phase den Hilfsschirm 7 und den Lastenschirm 6 gegebenenfalls über einen weiteren Hilfsschirm 8 verbindet, weist eine Stelle 31 auf, an der dieser mittels einer Entkoppelungs-Einrichtung 30 entkoppelbar mit der Last 2 oder der Lastaufnahme-Vorrichtung 3 verbunden ist.

In dem Fall, dass ein weiterer Hilfsschirm 8 vorgesehen ist, verbindet ein weiterer Ausziehstrang 12c den weiteren Hilfsschirm 8 mit dem ersten Hilfsschirm 7. Der weitere Ausziehstrang 12c ist zusätzlich über eine Entkopplungseinrichtung 30 und optional ein Verbindungsstück 12d an der Last 2 oder der Lastaufnahme-Vorrichtung 3 ankoppelbar und entkoppelbar. Bei der Entkoppelung des Ausziehstranges 12c von der Last 2 bzw. der Lastaufnahme-Vorrichtung 3 bleibt die Verbindung dieses Teils des Ausziehstranges 12c mit dem Lastenschirm-Paket 6a und gegebenenfalls über einen weiteren Hilfsschirm 8 erhalten. Die Entkopplungs-Einrichtung 30 kann mit einer Zeitverzögerungs-Einrichtung funktionieren, d.h. nach einer Initiierung der Entkopplungs-Einrichtung 30 ist das Ablaufen einer vorbestimmten Zeitspanne erforderlich, bis die Entkopplung tatsächlich erfolgt. Die Zeitverzögerungs-Funktion kann auch entfallen.

Die Initiierung oder die Aktivierung der Entkopplungs-Einrichtung 30 erfolgt durch das Lösen des Entkopplungs-Stranges 11 vorzugsweise durch das Erreichen einer vorbestimmten Zugkraft, die eintritt, wenn die Last 2 den Laderaum des Flugzeugs verlassen hat und von den Luftkräften vom Rumpf weggezogen wird. Die funktionale Kopplung zwischen dem Lösen des Entkopplungs-Stranges 11 und der Initiierung oder der Aktivierung der Entkopplungs-Einrichtung 30 kann durch eine mechanische Kopplung oder auf andere Weise erfolgen. Bei der mechanischen Kopplung kann mittels eines um die Last 2 oder die Lastaufnahme-Vorrichtung 3 teilweise umlaufenden Stranges bewerkstelligt werden, der die Befestigungsstelle 11a des Entkopplungs-Stranges 11 oder diesen selbst mit der Entkopplungs-Einrichtung 30 verbindet. Durch das Ziehen des Entkopplungs-Stranges 11 aufgrund der Luftkräfte mit ausreichender Kraft an dem teilweise umlaufenden Strang zieht dieser mit entsprechender Kraft an der Entkopplungs-Einrichtung 30, die ab einer Soll-Kraft gelöst oder geöffnet wird.

In der dreistufigen Ausführungsform ist in dem den ersten Hilfsschirm 7 und den zweiten Hilfsschirm 8 verbindenden Ausziehstrang 12c eine Soll-Trennstelle 13 angeordnet, die bei einer vorbestimmten Zugspannung in der Ausziehstrang 12c gelöst wird, so dass sich der erste Hilfsschirm 7 vom zweiten Hilfsschirm 8 löst. Dies tritt bei der dreistufigen Ausführungsform genau dann auf, nachdem bei der dreistufigen Ausführungsform die Ausziehleine 12 oder 12c mit 12b ausgezogen ist (Fig. 1b, 2b, 3b, 4b) und die Luftkräfte die vorbestimmte Zugspannung im Ausziehstrang 12c bewirken.

Bei der dreistufigen und bei der alternativen zweistufigen Ausführungsform des erfindungsgemäßen Lastenabsetz-Systems 1, bei dem nur ein Hilfsschirm 7 vorgesehen ist, ist die Entkopplungs-Einrichtung 30 an der Last 2 oder der Lastaufnahme-Vorrichtung 3 zusammen mit dem Befestigungsglied 12d und dem Entkopplungs-Strang 11 optional angeordnet und kann entfallen. In diesem Fall würde der Ausziehstrang 12 unmittelbar nach dem Absetzen aus dem Flugzeug aufgrund der Luftkräfte ausgezogen und das Stabilisierungs-Geschirr 14 gespannt werden. Bei der zweistufigen Ausführungsform ist eine Trennstelle analog der Trennstelle 13 der dreistufigen Ausführungsform nicht vorgesehen.

Die Entkoppelung mittels der Entkoppelungs-Einrichtung 30 kann alternativ zur Betätigung aufgrund des Erreichens einer vorbestimmten Zugkraft auch durch eine andersartige Schaltung, beispielsweise ein Zeitschaltung oder einen Signalgeber erfolgen. Diese funktionale Kopplung kann beispielsweise auch mittels einer elektrischen Schaltung oder über eine Sende-Empfangs-Einrichtung erfolgen. Insbesondere ist eine in den Figuren 1b und 2b dargestellte Ausführungsform möglich, bei der eine Entkoppelungs-Einrichtung 30 vorgesehen ist, die mit dem Entkopplungsstrang 11 unmittelbar nach dem Absetzen aus dem Flugzeug zusammenwirkt.

Die erste Auslöse-Einrichtung 20 dient der Lösung des Stabilisierungs-Geschirrs 14 von der Last 2 oder der Lastaufnahme-Vorrichtung 3 oder von einem entsprechenden Abschnitt der Ausziehleine 12 oder der Durchtrennung der Stabilisierungs-Stränge 14a, 14b des Stabilisierungsgeschirrs 14, jeweils zu bestimmten Zeitpunkten oder innerhalb bestimmter Zeitintervalle. Die Zeitpunkte bzw. Zeitintervalle können vorbestimmt sein oder manuell oder automatisch während des Verfahrens festgelegt werden. Vorzugsweise wird durch das Auftreten einer vorbestimmten Zugkraft bzw. -spannung in einem bestimmten Bereich der Ausziehstranges 12 die erste Auslöse-Einrichtung 20 aktiviert oder initiiert, um daraufhin nach einem voreingestellten Zeitintervall das Stabilisierungs-Geschirr 14 zu durchtrennen oder zu lösen.

Die erste Auslöse-Einrichtung 20 kann beispielsweise eine Zündeinrichtung umfassen, aktiviert wird, indem Kontakte durch das Auftreten einer vorbestimmten Zugkraft bzw. - spannung in einem bestimmten Bereich der Ausziehstranges 12 in Berührung kommen. Dies kann dadurch erreicht werden, dass die Kontakte in einer vorgespannten zueinander beabstandeten Stellung gehalten werden. Die Aktivierung bewirkt das Zünden einer Zündschnur. Das Durchbrennen der Zündschnur erfolgt aufgrund einer bestimmten Länge derselben nach einer vorbestimmten Zeit des Auftretens der Zugspannung, woraufhin über einen entsprechenden Mechanismus eine Betätigungsvorrichtung zur Lösung oder Durchtrennung des Stabilisierungs-Geschirrs 14 betätigt wird. Die vorbestimmte Zeit liegt je nach Gestalt und Gewicht der Last 2 im Bereich zwischen 1 Sekunden und 8 Sekunden und vorzugsweise im Bereich zwischen 2 und 6 Sekunden nach der Initiierung, d.h. nachdem der erste bzw. einzige Hilfsschirm 8 den Auszugsstrang 12 unter entsprechenden Zug gesetzt hat.

Die Betätigungs-Vorrichtung kann eine Schneidvorrichtung z.B. mit einem Klappmesser oder eine andersartige Vorrichtung, z. B. mit einem Karabiner sein.

Die Initiierung der Auslöse-Einrichtung 20 kann auch über eine entsprechende Sensorik und die Zeit-Verzögerung für die darauffolgende Betätigung der Betätigungs-Vorrichtung mittels einer Zeitschaltuhr realisiert sein.

Die Auslöse-Einrichtung 20 kann auch mittels einer entsprechenden elektrischen Einrichtung realisiert sein, die über die Zugspannung in dem Ausziehstrang 12 beispielsweise eine Zeitschaltung die Zeit-Verzögerung für die darauffolgende Betätigung der Betätigungs-Vorrichtung betätigt.

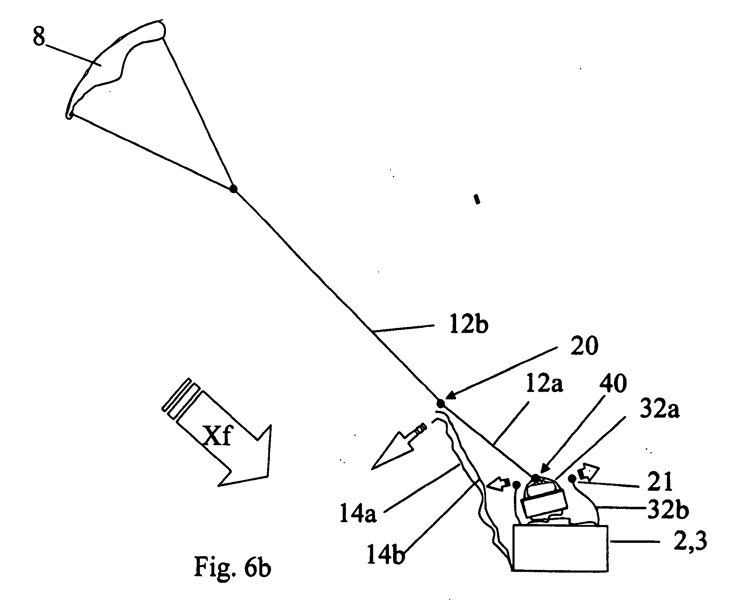

In einer Variante, in der die Steuereinheit 5 lösbar an der Last oder der Lastaufnahme-Vorrichtung angeordnet ist (Figur 6b), wird eine weitere Auslöse-Einrichtung 21 aktiviert, welche Befestigungsmittel 32b freigibt, um das Lösen der Steuereinheit 5 zu bewirken. Durch das Lösen der Steuereinheit 5 hängt die Last 2 bzw. die Lastaufnahme-Vorrichtung 3 über eine entsprechende Aufhänge-Vorrichtung 70 an der Steuereinheit 5. Die Auslöseeinrichtung 20 kann auch diese Funktion einer weiteren Auslöse-Einrichtung 21 mit umfassen. Vorzugsweise sind in diesem Fall für jede dieser Funktionen jeweils eine Auslöseeinrichtung 20 bzw. eine weitere Auslöse-Einrichtung 21 vorgesehen, die zeitgleich oder zeitversetzt aktiviert werden. Bei der zeitversetzten Aktivierung wird die weitere Auslöse-Einrichtung 21 vorzugsweise in einem Zeitabstand zwischen 0 und 5 Sekunden nach der weiteren Auslöse-Einrichtung 21 aktiviert. Diese zeitversetzte Aktivierung der beiden Auslöse-Einrichtungen 20, 21 kann funktional abhängig oder funktional unabhängig voneinander erfolgen. Im ersten Fall könnte eine elektrische, elektronische oder mechanische Kopplung zwischen beiden weiteren Auslöse-Einrichtungen bestehen. Im zweitgenannten Fall ermittelt jede weiteren Auslöse-Einrichtung 20, 21 den relevanten zeitliche Bezugspunkt eigenständig.

Durch das Lösen der weiteren Auslöse-Einrichtung 21 wird die Aufhänge-Vorrichtung oder das Lastgeschirr 70 in die Trage- und vorzugsweise die X-Stellung gebracht und ein Abstand von Steuereinheit 5 zur Last 2 realisiert.

Zur Realisierung der Zeitverzögerung sowie der Betätigungs-Vorrichtung sind Komponenten nach dem Stand der Technik verwendbar. Die Zeitverzögerung kann auch mittels einer Schmelzdraht-Sicherung realisiert sein. Die Betätigungsvorrichtung kann auch einen vorgespannten Pin umfassen, der über ein Kraftelement betätigt wird und eine Schneide-Einrichtung betätigt.

Das Stabilisierungsgeschirr 14 verhindert, dass die Last 2 in einer frühen Phase des Absetzvorganges in Schwingung gerät. Der Auslösemechanismus 20 bewirkt in einer bestimmten Phase des erfindungsgemäßen Absetzverfahrens, das Stabilisierungs-Geschirr 14 nach einer vorbestimmten Zeit von der Last 2 oder der Lastaufnahme-Vorrichtung 3 abzukoppeln und die Last bzw. die Lastaufnahme-Vorrichtung in einem vorgegebenen Winkelbereich zu kippen.

Der Lastenschirm 6 ist in seiner gepackten Form 6a in der frühen Phase des Absetzvorganges mit Hilfe eines Befestigungsmittels 32a an der Steuereinheit 5 befestigt. Die Lösbarkeit des Befestigungsmittels 32a wird mittels einer zweiten Auslöse-Einrichtung 40 durch Auslösen oder Öffnen eines Verschlusses oder Durchtrennen entsprechender Stränge bewerkstelligt.

Die Aktivierung oder Initiierung der zweiten Auslöse-Einrichtung 40 erfolgt vorzugsweise ebenso wie bei der ersten Auslöse-Einrichtung 20 durch das Auftreten einer vorbestimmten Zugkraft bzw. -spannung im Ausziehstrang 12. Erfindungsgemäß erfolgt das Auslösen oder Durchtrennen im Zeitintervall zwischen 3 und 12 Sekunden und vorzugsweise zwischen 5 und 8 Sekunden nach dem Auftreten der vorbestimmten Zugspannung in dem Ausziehstrang 12, und in jedem Fall nach dem Lösen des Stabilisierungs-Geschirrs 14.

Der Zeitpunkt für die Aktivierung der ersten 20 - und falls vorhanden, der weiteren Auslöse-Einrichtung 21 - sowie der zweiten Auslösungs-Einrichtung 40 und die Durchtrennung des Stabilisierungs-Geschirrs 14 bzw. des Befestigungsmittels 18 oder 16 kann auch bestimmt sein durch den Zeitpunkt des Absetzens aus dem Flugzeug zuzüglich einer vorgegebenen Zeitdifferenz, wobei diese Zeitdifferenz zwischen 1 und 10 Sekunden und vorzugsweise zwischen 2 und 5 Sekunden betragen kann. Insbesondere kann die Zeitdifferenz 3 Sekunden betragen. In alternativen Ausführungsform des Lastenabsetz-Systems 1 kann dafür auch ein absoluter Zeitpunkt verwendet werden, der von dem Navigations- und Flugführungsrechner oder einer externen, d.h. einer Bord- oder Bodenstation oder von dem Missionsplanungssystem ermittelt wird. In diesen Fällen müsste die Auslöse-Einrichtung 20 eine entsprechende Schaltung aufweisen.

Bei einer derartigen Ausführungsform mit dem ersten und zweiten Auslösemechanismus können beide in Datenverbindung mit dem Navigations- und Führungssystem oder dem Missionsplanungssystem stehen.

Ein Befestigungs-Mittel 32 kann mit dem Lastenschirm auch die nicht an der Last 2 oder der Lastaufnahme-Vorrichtung 3 fixierte Steuereinheit 5 an dieser halten (Fig. 1b). Bei Vorhandensein einer solchen an der Last 2 oder der Lastaufnahme-Vorrichtung 3 fixierten Steuereinheit 5 kann das Befestigungs-Mittel 32a den gepackten Lastenschirm 6a auch an der Steuereinheit 5 oder an der Last 2 oder der Lastaufnahme-Vorrichtung 3 halten.

Erfindungsgemäß umfasst also das Lastenabsetz-System 1 eine erste Auslöse-Einrichtung 20, falls vorhanden eine weitere Auslöse-Einrichtung 21 und eine zweite Auslöse-Einrichtung 40, die in Datenverbindung mit dem Navigations- und Führungssystem oder dem Missionsplanungssystem bzw. einer Zeitschalt-Vorrichtung stehen können. Durch Betätigen der ersten Auslöse-Einrichtung 20 zu einem vorbestimmten Zeitpunkt oder aufgrund Erreichen einer vorbestimmten Zugspannung im Ausziehstrang 12 unter der Wirkung einer Zeitverzögerungsfunktion wird das Stabilisierungs-Geschirr 14 gelöst. In einer Variante (Figur 1b), in der die Steuereinheit 5 nicht an der Last 2 oder der Lastaufnahme-Vorrichtung 3 fixiert ist, wird die Auslöse-Einrichtung 21 zeitgleich oder zeitversetzt mit der Auslöse-Einrichtung 20 gelöst. Dadurch wird der gepackte Lastenschirm mit der Steuereinheit 5 von der Last 2 oder der Lastaufnahme-Vorrichtung 3 separiert. Durch Betätigen der zweiten Auslöse-Einrichtung 40 zu einem weiteren vorbestimmten Zeitpunkt oder aufgrund Erreichen derselben oder einer weiteren vorbestimmten Zugspannung im Ausziehstrang 12 unter der Wirkung einer weiteren Zeitverzögerungsfunktion wird das Befestigungsmittel 32 gelöst, wodurch der Lastenschirm 6 freigegeben wird und sich öffnet. Es kann vorgesehen sein, dass sich dadurch auch die Befestigung 32 des gepackten Gleitschirms an der Steuerbox 5 löst, so dass die Steuerbox am unter Windeinfluss ausgezogenen Steuerbox-Tragegurt hängt. Optional kann vorgesehen sein, dass durch Betätigen der zweiten Auslöse-Einrichtung 40 die Befestigung der Steuerbox an der Last 2 bzw. der Lastaufnahme-Vorrichtung 3 gelöst wird, so dass die Last 2 oder die Lastaufnahme-Vorrichtung 3 an der weiteren Aufhängevorrichtung 70 unterhalb der Steuerbox oder Steuereinheit hängt. Alternativ kann das Lastenabsetz-System 1 eine Auslösevorrichtung zur Freigabe des Lastenschirms 6 und der Steuerbox 7 umfassen, die in Datenverbindung mit dem Navigations- und Führungssystem oder dem Missionsplanungssystem und einer Zeitschalt-Vorrichtung steht, die zu einem vorbestimmten Zeitpunkt durch Aktivieren der Auslöse-Vorrichtung die Befestigung des gepackten Gleitschirms an der Steuerbox löst, so dass die Steuerbox 7 am unter Windeinfluss ausgezogenen Steuerbox-Tragegurt hängt, und die Befestigung der Steuerbox an der Lastaufnahme-Vorrichtung löst, so dass die Lastaufnahme-Vorrichtung an den unter Windeinfluss ausgezogenen Lastaufnahme-Tragegurten hängt. Die Auslösevorrichtung kann auch nur ein Befestigungsmittel sowohl für die Steuerbox 7 als auch für den Lastengleitschirm 6 umfassen.

Die Zeitpunkte zur Aktivierung der ersten 20 und gegebenenfalls weiteren 21 und der zweiten 40 Auslöse-Einrichtung für die Steuerbox 7 und der Zeitpunkt zur Aktivierung der Auslösevorrichtung für den Lastengleitschirm 6 können identisch sein. In diesem Fall sowie in dem Fall, in dem diese Zeitpunkte verschieden sind, kann der Zeitpunkt oder können die Zeitpunkte zur Aktivierung der Auslösevorrichtung für die Steuerbox 5 und den Lastengleitschirm 6 bestimmt werden nach dem Absetz-Zeitpunkt des Lastenabsetz-Systems 1 vom Flugzeug zuzüglich einer vorgegebenen Zeitspanne. Der Zeitpunkt zur Betätigung der zweiten Auslöse-Einrichtung 40 kann auch bestimmt werden nach dem Auslöse-Zeitpunkt für das Stabilisierungsgeschirr 14 zuzüglich einer vorgegebenen Zeitspanne. Dabei kann eine vorgegebene Zeitspanne vorgesehen sein. Auch können die Auslöse-Zeitpunkte für die Auslöse-Einrichtungen 20, gegebenenfalls 21 und 40 von dem Navigations- und Führungssystem ermittelt werden, wobei auch externe Sensoren, wie z.B. Luftdatensensoren verwendet werden können. Weiterhin kann auch ein absoluter Zeitpunkt verwendet werden, der bestimmt ist von einer externen Signalquelle oder der fest einprogrammiert sein kann.

Die Last 2 bzw. die Lastaufnahme-Vorrichtung 3 hängt bei oder nach der Öffnung des Lastenschirms 6 mittels einer Aufhänge-Vorrichtung 60 an derselben. Bei Vorhandensein einer Steuereinheit 5 hängt diese mittels der Aufhänge-Vorrichtung 60 an dem Lastenschirm 6, wobei die Steuereinheit fest oder starr mit der Last 2 bzw. der Lastaufnahme-Vorrichtung 3 verbunden sein kann oder diese an der Steuereinheit 5 mittels einer weiteren Aufhänge-Vorrichtung 70 hängt.

Die Aufhänge-Vorrichtung 60, die beispielsweise vom Lastenschirm 6 ausgehenden Stränge 61 und 62 umfasst, kann eine tote Schlaufe 65 an einem der Stränge umfassen, die mittels einer dritten Auslöse-Einrichtung 90 aufgelöst werden kann, wodurch die Verlängerung des entsprechenden Stranges bewirkt wird. Durch die noch nicht gelöste Schlaufe 65 wird einer der Stränge 61, 62 verkürzt im Vergleich zu einer Länge des entsprechenden Stranges, die auftritt, wenn die Schlaufe gelöst ist. Der entsprechende verkürzte Strang bewirkt eine stärkere Krümmung des Lastenschirms 6 auf der Seite desselben, an dem der jeweilige Strang angeschlossen ist, wodurch eine günstigere Fällstellung erreicht wird. Das Betätigen der Auslöse-Einrichtung 90 erfolgt eine vorbestimmte Zeit oder ein vorbestimmtes Zeitintervall nach dem Auftreten einer vorbestimmten Zugspannung in dem entsprechenden Strang, was einer vorbestimmten Zeit nach dem Öffnen des Lastenschirms entspricht. Dadurch wird erreicht, dass eine vorbestimmte Zeit die Füllstellung des Lastenschirms 6 erhalten bleibt. Nach dem Betätigen der Auslöse-Einrichtung 90 wird durch die Lösung der Schlaufe 65 und die dadurch bewirkte Verlängerung des entsprechenden Stranges 61 die Gestalt des Lastenschirms 6 von der Füllstellung in die Flugstellung übergeführt.

Die dritte Auslöse-Einrichtung ist optional und kann gestaltet sein, wie es im Zusammenhang mit der ersten Auslöse-Einrichtung 20 beschrieben worden ist. Das Lösen der Schlaufe 65 erfolgt nach dem Betätigen der zweiten Auslöse-Einrichtung 40 und vorzugsweise im Zeitintervall zwischen 8 und 14 Sekunden nach dem Auftreten der vorbestimmten Zugspannung in dem entsprechenden Strang des Aufhänge-Vorrichtung 60 während des Öffnens des Lastenschirms 6.

Die weitere Aufhänge-Vorrichtung 70 kann im Zusammenhang mit einer entsprechenden Sensorik und einer Getriebe-Einrichtung der Steuereinheit 5 stehen, um bei der Landung ein Flare-Manöver durchzuführen. Die weitere Aufhänge-Vorrichtung 70 kann entfallen, wenn die Steuereinheit 5 auf der Last 2 oder der Lastaufnahme-Vorrichtung 3 fixiert ist, und die Flare-Aktuatorik auf dem relativen Anheben des Schirms von der Steuereinheit 5 beruht.

Vor dem Absetzen befindet sich das erfindungsgemäße Lastenabsetz-System 1 im Rumpf oder einem Frachtraum eines Flugzeugs, der an einer bestimmten Seite geöffnet wird, um die abzusetzende Last oder das Lastenabsetz-System 1 aus dem Flugzeug zu entfernen. Üblicherweise wird dabei der Hilfsschirm oder der erste Hilfsschirm 7 vor der Last 3 aus dem Flugzeug geworfen. In der Figur 1a bzw. 1b ist die Phase vor dem Abwurf der Last 2 aus dem Flugzeug und in der Figur 2a bzw. 2b die Phase kurz nach dem Abwurf, in der die Last noch über den Entriegelungsstrang 11 mit einem Rumpfteil des Flugzeugs in Verbindung steht, dargestellt.

Nach dem Abwurf öffnet sich der Hilfsschirm 7 (Figur 2a) bzw. der erste Hilfsschirm 7. Die Länge des Ausziehstranges 12 vom Hilfsschirm 7 bis zur Entkopplungs-Einrichtung 30 (Fig. 2a bzw. 2b) sowie die Länge des Entriegelungsstranges 11 sind derart dimensioniert, dass sich die Last in vorteilhafter und vorbestimmter Weise nach Verlassen des Flugzeuges in den Wind stellt (Fig. 2a und 2b). In dem Fall, in dem ein Entkopplungs-Strang 11 im Zusammenwirken mit einer Entkopplungs-Einrichtung 30 vorgesehen ist, entriegelt bei dem Auftreten einer vorbestimmten Zugspannung im Entkopplungs-Strang 11 oder im Ausziehstrang 12c die Entkopplungs-Einrichtung 30 am Verbindungsglied 12d. Dies ist bei der dreistufigen Ausführungsform des Lastenabsetz-Systems 1 notwendigerweise und bei der zweistufigen Ausführungsform (Fig. 1a, 2a, 3a) optional und vorzugsweise vorgesehen.

Bei der dreistufigen Ausführungsform wird durch das Öffnen der Entkopplungs-Einrichtung 30 der weitere Hilfsschirm 8 oder Bremsschirm durch den Ausziehstrang 12c von der Last 2 weg und in den Wind gezogen, wodurch der weitere Hilfsschirm 8 von der Luftströmung geöffnet wird. Zu diesem Zweck kann vorgesehen sein, dass der erste Hilfsschirm oder der Ausziehschirm 7 eine Packhülle 7b vom Hilfsschirm oder Stabilisierungs- oder Bremsschirm 8 wegzieht, so dass sich dieser entfalten kann. Die Last 2 wird in ihrer räumlichen Lage relativ zur Richtung des Ausziehstranges 12 mittels des Stabilisierungsgeschirrs 14 stabilisiert.

Bei der zweistufigen Ausführungsform mit einer Entkopplungs-Einrichtung 30 wird zunächst der Hilfs- oder Stabilisierungsschirm 7 in die Strömung geworfen. Die Luftkräfte bewirken das Auftreten der vorbestimmten Zuspannung in dem Ausziehstrang 12, um die Entkopplungs-Einrichtung 30 zu öffnen. Durch das Öffnen der Entkopplungs-Einrichtung 30 wird der Entkopplungs-Strang 11 von der Last 2 oder der Lastaufnahme-Vorrichtung 3 gelöst und das Teilstück 12a des Ausziehstrangs 12 und dadurch das Stabilisierungsgeschirr 14 gespannt. Dadurch wird die Last 2 in einer vorbestimmten Lage relativ zum gespannten Ausziehstrang 12 gehalten (Figur 3a).

Der Entkopplungs-Strang 11 verbleibt aufgrund des Öffnens der Entkopplungs-Einrichtung 30 vorzugsweise am Flugzeug. Alternativ kann jedoch auch ein weiterer Entkopplungs-Mechanismus am Flugzeug vorgesehen sein, dessen Öffnen zeitgleich mit dem Öffnen der Entkopplungs-Einrichtung 30 dazu führt, dass sich der Entkopplungs-Strang vom Flugzeug löst und von dem Lastenabsetz-System 1 mitgeführt wird.

Nach dem Öffnen des Hilfs- oder Stabilisierungs- oder Bremsschirms 7 oder des weiteren Hilfsschirms 8 wird die Lastfluggeschwindigkeit verringert. Befindet sich das Lastenabsetz-System 1 in der in der Figur 4a bzw. 4b dargestellten ersten Flugphase, in der der Hilfsschirm über den in seine Länge gezogenen Ausziehstrang 12 mit dem noch gepackten Lastenschirm 6a in Verbindung steht und die Stabilisierungsstränge 14a, 14b noch an dem Befestigungsmittel oder der Befestigungsstelle 19 an dem Ausziehgurt 12 und an der Befestigungsstelle 16a, 16b an der Last 2 oder der Lastaufnahme-Vorrichtung 3 befestigt ist, sorgen die Stabilisierungsleinen 14a, 14b für eine stabile Lagehaltung der Lastaufnahme-Vorrichtung in der Luft. Bei einer Flugrichtung XF bietet der Hilfsschirm einen größeren Windwiderstand als die Lastaufnahme-Vorrichtung 3, so dass die Lage des in seine Länge gezogenen Ausziehgurts 12 in einem vorbestimmten und engen Lagenbereich liegt, während der Abschnitt 12b des Ausziehgurts und die Länge des zumindest einen Stabilisierungs-Stranges 14, 14a, 14b die Lage der Lastaufnahme-Vorrichtung 3 im Raum bestimmen. Die Figuren 5a und 5b zeigen das Lastenabsetz-System 1 bei einer durch den Luftwiderstand verlangsamten Geschwindigkeit, bei der der Ausziehstrang 12 bereits eine Neigung zur Horizontalen aufweist und die Last 2 aufgrund der Abmessungen des Stabilisierungs-Geschirrs 14 noch eine horizontale Lage einnimmt.

Zur Lösung des Stabilisierungsgeschirrs 14 oder der Stabilisierungs-Stränge 14a, 14b von dem Ausziehstrang 12 oder / und von der Last 2 bzw. der Lastaufnahme-Vorrichtung 3 wird die Auslöse-Einrichtung 20 betätigt, die beispielsweise an der Verbindungsstelle 18 bzw. 18a, 18b oder an den Verbindungsstellen 14a, 14b oder dazwischen an den Stabilisierungssträngen angeordnet sein kann. Die Längen des Stabilisierungs-Geschirrs 14 ist vorzugsweise derart gewählt, dass der Anstellwinkel des Lastenabsetz-Systems 1, also der Winkel zwischen dem Verlauf des ausgezogenen Auszieh-Stranges 12 zur Horizontalen zwischen 40 und 60 Grad beträgt.

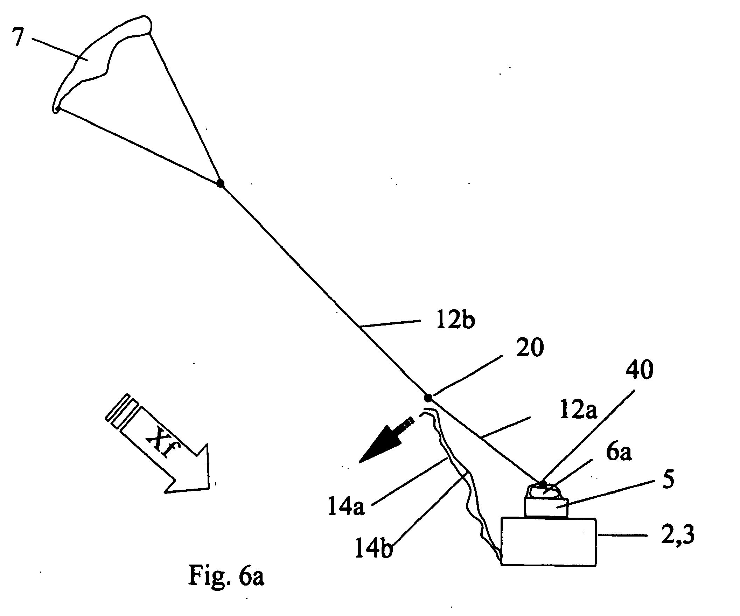

In den Figuren 6a und 7a bzw. 6b und 7b ist das Lastenabsetz-System 1 in einer zweiten Flugphase nach Entfernen der Stabilisierungsleinen 14 dargestellt. Das Entfernen der Stabilisierungsleinen 14 findet zu einem Zeitpunkt statt, in dem sich das Lastenabsetz-System 1 durch den Luftwiderstand verlangsamt hat. Deshalb liegt der ausgezogene Ausziehgurt 12 weniger flach oder steiler in der Luft, als in dem in der Figur 4a bzw. 4b gezeigten Zustand. Durch das Entfernen des Stabilisierungsgeschirrs 14 verändert sich die Lage der Last 2 oder der Lastaufnahme-Vorrichtung 3 relativ zum Ausziehgurt 12. Im Vergleich zu einer Zustandslage der Lastaufnahme-Vorrichtung, die diese wenige Sekunden vorher eingenommen hat, ist die Lageänderung der Lastaufnahme-Vorrichtung 3 wesentlich geringer als die Lageänderung des ausgezogenen Ausziehgurts 12 (vgl.

Figuren 3a, 3b und 6a, 6b). Dadurch kann eine ungünstige, d.h. zu stark gekippte Lage der Last 2 oder der Lastaufnahme-Vorrichtung 3 im Vergleich zu einer Soll-Lage derselben vermieden werden.

Der Hilfs- oder Bremsschirm 8 trägt die Last 2 vorzugsweise über eine Dreipunktaufhängung mittels des Ausziehstranges 12 und des Stabilisierungs-Geschirrs 14. Dies geschieht, wie voranstehend ausgeführt, durch die Öffnung der Entkopplungs-Einrichtung 30. Danach zieht der Ausziehstrang 12 an seinem Angriffspunkt an der Last 2, der bei den dargestellten Ausführungsformen an der Oberseite der Last 2 oder der Lastaufnahme-Vorrichtung 3 gelegen ist. Die dadurch an dem Angriffspunkt des Ausziehstranges 12 wirkende Bremskraft versetzt der Last 2 ein Drehmoment und bringt diese zum Drehen, bis das Stabilisierungsgeschirr 14 auf Zug belastet wird. Der Hilfsschirm 7 bzw. 8 verringert die Fallgeschwindigkeit des Lastenabsetz-Systems 1, während der Ausziehstrang 12 mit dem Stabilisierungsgeschirr 14 das Schwingen der Last 2 verringert, bis diese eine Geschwindigkeits-reduzierte stabile Fluglage eingenommen hat.

In der in den Figuren 5a bzw. 5b dargestellten Flugphasen werden die erste Auslöse-Einrichtung 20, gegebenenfalls die weitere Auslöse-Einrichtung 21, und die zweite Auslöse-Einrichtung 40 initiiert oder geschärft. Dies geschieht vorzugsweise dadurch, dass beide Auslöse-Einrichtungen 20 (gegebenenfalls mit 21) und 40 gleichzeitig, vorzugsweise durch das Auftreten einer vorbestimmten Zugspannung in dem Ausziehstrang 12 aktiviert oder initiiert werden und über zugeordnete Zeitverzögerungs-Einrichtungen zeitversetzt betätigt werden, wobei zuerst die erste Auslöse-Einrichtung 20, gegebenenfalls die weitere Auslöse-Einrichtung 21 gleichzeitig oder zeitversetzt zu dieser, und nachfolgend die zweite Auslöse-Einrichtung 40 betätigt wird.

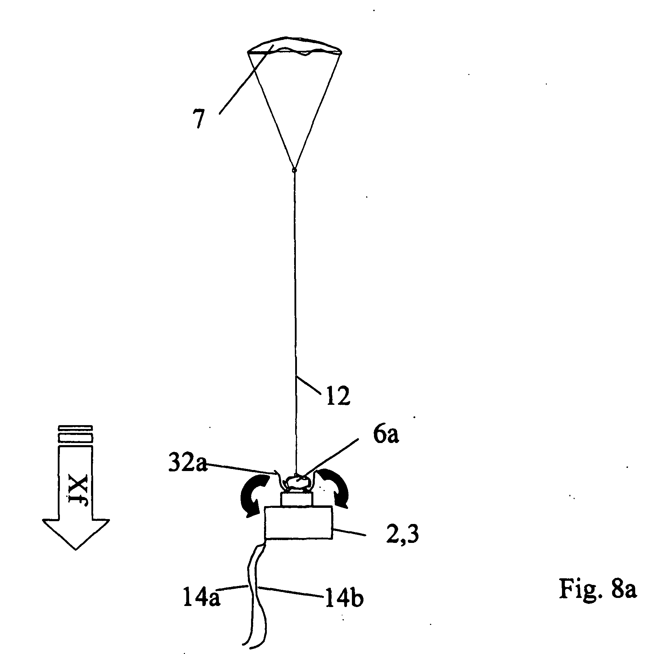

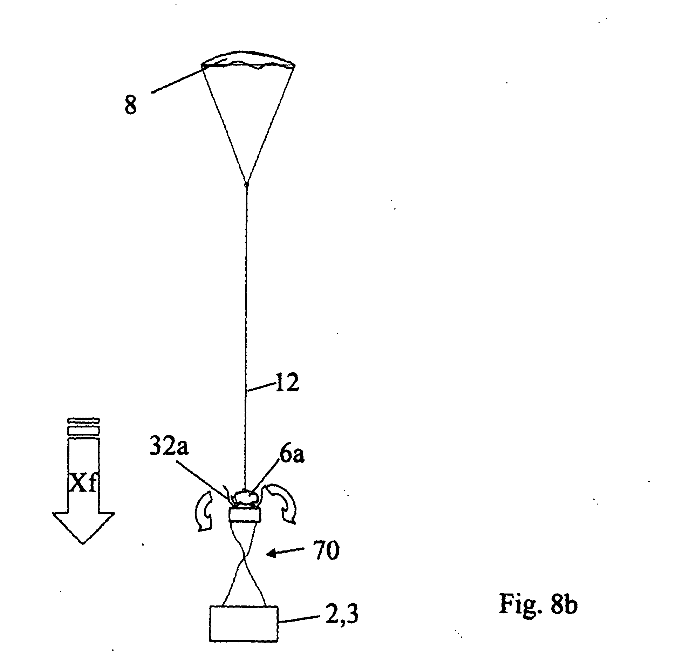

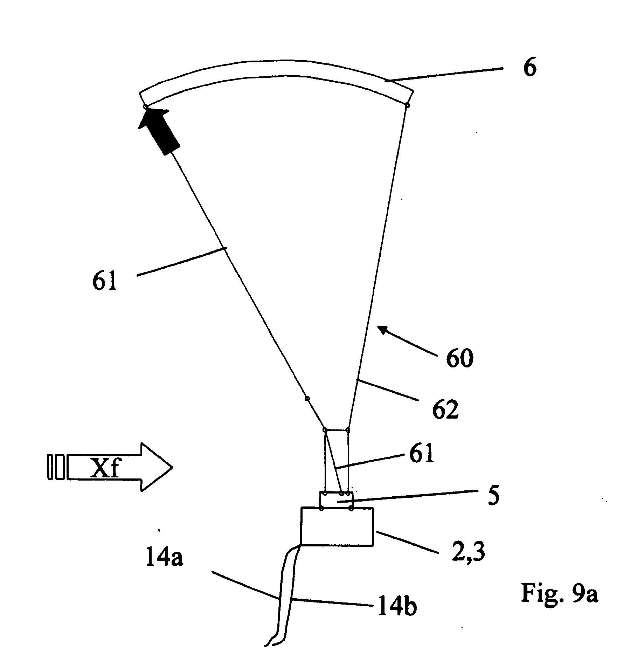

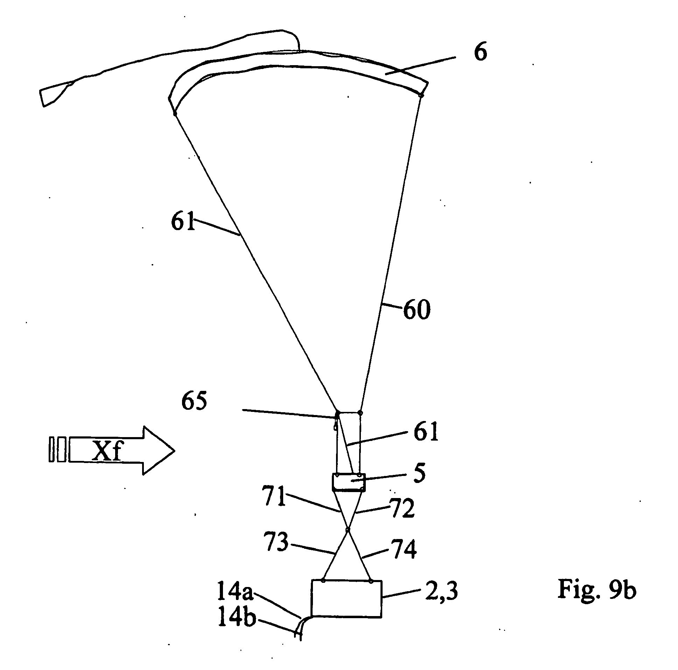

In der Figur 7a bzw. 7b ist die Phase gezeigt, in der die erste Auslöse-Einrichtung 20 bereits, die zweite Auslöse-Einrichtung 40 noch nicht geöffnet oder gelöst ist. Das Öffnen der zweiten Auslöse-Einrichtung 40 ist in der Figur 8a bzw. 8b dargestellt. Der daraus resultierende Zustand ist in der Figur 9a bzw. 9b dargestellt. In der Figur 9a ist eine Ausführungsform des erfindungsgemäßen Lastenabsetz-Systems 1 gezeigt, bei der die Steuereinheit 5 an der Last 2 bis zur Landung bleibt.

In der Ausführungsform nach der Figur 9b wird durch das Öffnen der ersten Auslöse-Einrichtung 20, gegebenenfalls auch der weiteren Auslöse-Einrichtung 21, die weitere Aufhänge-Vorrichtung 70 gelöst, so dass sich dadurch die Steuereinheit 5 von der Last 2 entfernt. Dies kann alternativ auch durch das Öffnen der ersten Auslöse-Einrichtung 20 geschehen. Dadurch wird ein Flare bei der Landung mittels entsprechender Steuer-Mechanismen und Flare-Einrichtungen in der Steuereinheit 5, die optional vorgesehen sind, ermöglicht. Die weitere Aufhänge-Vorrichtung 70 kann jedoch auch aus anderen Gründen, z. B. zur Erreichung eines vorteilhaften Landens, vorgesehen sein. Die weitere Aufhänge-Vorrichtung 70 nach der Figur 9b ist aus vier Aufhänge-Strängen 71, 72, 73, 74 gebildet, wobei jeweils zwei Aufhänge-Stränge 71, 72 bzw. 73, 74, die beabstandet voneinander von der Steuereinheit 5 bzw. von der Last 2 oder Lastaufnahme-Vorrichtung 3 verlaufen zwischen der Last 2 und der Steuereinheit 5 verbunden sind. An dieser Stelle sind auch die beiden Paare von Aufhänge-Strängen 71,72 bzw. 73, 74 miteinander verbunden. Dadurch wird eine X-Stellung der Aufhänge-Stränge 71, 72 bzw. 73, 74 erreicht, wodurch der Vorteil erzielt wird, dass die stabile Fluglage unabhängig ist von der Schwerpunktslage der Last 2 oder der Druckpunktlage des Lastenschirms 6. Dadurch erhält auch die Steuereinheit 5 eine stabile Lage. In einem Zeitabstand nach dem in der Figur 7b dargestellten Zustand wird die zweite Auslöse-Einrichtung 40 betätigt (z.B. aufgrund des Erreichens der vorbestimmten Zugspannung in der Ausziehstrang 12) und der Lastenschirm 6 freigegeben, so dass sich dieser öffnen kann.

In der Figur 9a und 11a ist eine Ausführungsform des Lastenabsetz-Systems 1 gezeigt, bei der die Steuereinheit 5 an der Last 2 oder der Lastaufnahme-Vorrichtung 3 angekoppelt bleibt. Die Steuereinheit 5 kann mit oder ohne einer Flare-Funktion und - Einrichtung ausgestattet sein. In der Figur 11a ist eine Ausführungsform dargestellt, bei der die Steuereinheit 5 ein Flare-Manöver bewerkstelligen kann, was mit den Funktionspfeilen F1 und F2 angedeutet ist. Zur Durchführung des Flare ist vorzugsweise eine an der Steuereinheit 5 aufrollbar angekoppelter Flare-Aufhängestrang 61 der Aufhänge-Vorrichtung vorgesehen, der mit einer in Flugrichtung XF gesehen Hinterkante H des Lastenschirms 6 verbunden ist. In einer Phase vor dem Aufsetzen der Last 2 wird der Flare-Aufhängestrang 61 in der Steuereinheit 5 aufgerollt. Dadurch wird die Hinterkante H nach unten, d.h. in Richtung Boden gezogen. Zur Aufbringung der dadurch erforderlichen Zugkraft in dem Flare-Aufhängestrang 61 wird die Schirm-Auftriebskraft ausgenützt, wodurch die Schirmaufhängung 60 nach oben freigegeben wird. Dadurch wird die Hinterkante H nach unten gezogen. Die Flare-Einrichtung umfasst daher eine Schwerkraft-Aktuatorik.

Eine solche Schwerkraft-Aktuatorik kann auch durch das Absenken der Last 2 von der Steuereinheit 5 erreicht werden, wie dies in der Figur 11b dargestellt ist. Dabei werden die paarweisen Aufhänge-Stränge 71, 72 der Aufhänge-Vorrichtung 70 zwischen der Steuereinheit 5 und der Last 2 durch die Schwerkraft-Aktuatorik abgerollt (Bewegung F2 in der Figur 11b), um die Zugkraft für die Betätigung der Hinterkannte H mit einem definierten Übersetzungsverhältnis zu bewirken.

In einer besonderen Ausführungsform der Erfindung kann die Aufhänge-Vorrichtung 60 auch mit einer Öffnungs-Aktuatorik 65 insbesondere in der Gestalt einer toten Schlaufe vorgesehen sein, um die Öffnung des Lastenschirms 6 zu verbessern. Die Initiierung und auch Betätigung erfolgt mittels einer dritten Auslöse-Einrichtung 90, die verschiedenartig gestaltet sein kann. Dies kann mittels eines beschriebenen Mechanismus mit Zeitverzögerungsfunktion gebildet sein, der aufgrund des Erreichens einer vorbestimmten Zugspannung in einem Strang der Aufhänge-Vorrichtung 60 aktiviert oder initiiert wird. Dies kann jedoch auch über eine elektrische Schaltung oder eine Sende- und Empfangs-Einrichtung realisiert sein, die von extern, d.h. von außerhalb des Lastenabsetz-Systems 1 angesteuert werden kann, oder von einer Steuereinrichtung in der Steuereinheit 5.

Das gelandete Lastenabsetz-System 1 ist in der Figur 12a bzw. 12b dargestellt.

## Patentansprüche

1. Lastenabsetz-System (1) mit einer Last (2) oder einer Lastaufnahme-Vorrichtung (3), mit einem Lastenschirm (6) und mit einem Hilfsschirm (7), der mittels zumindest eines Ausziehstranges (12; 12a, 12b) mit dem Lastenschirm (6) verbunden ist,
**dadurch gekennzeichnet,**
- **dass** ein Stabilisierungs-Geschirr (14; 14a, 14b) zur Verbindung einer Verbindungsstelle (18) des Ausziehstranges (12; 12a, 12b) mit einem Befestigungsmittel (16) an der Last (2) oder der Lastaufnahme-Vorrichtung (3) vorhanden ist, das derart an der Last (2) oder der Lastaufnahme-Vorrichtung (3) angeordnet ist, daß im gespanntem Zustand in einer Flugphase nach Absetzen der Last (2) oder der Last-Aufnahmevorrichtung (3) letztere in einer vorbestimmten Lage relativ zum durch die Luftkräfte ausgezogenen Ausziehstrang (12; 12a, 12b) stabilisiert wird, indem es zusammen mit dem Ausziehstrang (12;12a,12b) die durch die Luftkräfte an der Last (2) oder der Lastaufnahme-Vorrichtung (3) auftretenden Drehmomente aufnimmt und den Winkel, der durch die vertikale Achse der Last (2) relativ zur Längserstreckung des aufgrund der Luftkräfte nach dem Absetzen ausgezogenen Ausziehstranges (12; 12a, 12b) auftritt, in einem vorbestimmten Winkelbereich hält,
- **dass** eine erste Auslöse-Einrichtung (20) zur Lösung des Stabilisierungs-Geschirrs (14; 14a, 14b) vorgesehen ist und
- **dass** eine zweite Auslöse-Einrichtung (40) zur Freigabe des Lastenschirms (6) von der Last (2) vorgesehen ist, so dass die Last (2) an einer Aufhänge-Vorrichtung (60) am Lastenschirm (6) hängt.

2. Lastenabsetz-System (1) nach dem Patenanspruch 1, **dadurch gekennzeichnet, dass** die erste und die zweite Auslöse-Einrichtung durch das Erreichen einer vorbestimmten Zugspannung im Ausziehstrang (12, 12a, 12b) aktiviert und über Zeitverzögerungs-Einrichtungen betätigt wird.

3. Lastenabsetz-System (1) nach dem Patenanspruch 1 oder 2, **dadurch gekennzeichnet, dass** die Zeitverzögerungs-Einrichtung der ersten Auslöse-Einrichtung (20, 21) derart eingestellt ist, dass das Lösen des Stabilisierungs-Geschirrs in einem Zeitintervall zwischen 2 und 6 Sekunden nach dem Auftreten der vorbestimmten Zugspannung in dem Auszieh-Strang (12; 12a, 12b) erfolgt.

4. Lastenabsetz-System (1) nach einem der voranstehenden Patenansprüche, **dadurch gekennzeichnet, dass** die Zeitverzögerungs-Einrichtung der zweiten Auslöse-Einrichtung (40) derart eingestellt ist, dass das Öffnen des Lastenschirms (6) in einem Zeitintervall zwischen 3 und 12 Sekunden nach dem Auftreten der vorbestimmten Zugspannung in dem Auszieh-Strang (12; 12a, 12b) erfolgt.

5. Lastenabsetz-System (1) nach einem der voranstehenden Patenansprüche, **dadurch gekennzeichnet, dass** eine Entkoppelungs-Einrichtung (30) vorgesehen ist, die mit einem mit einem Flugzeug-Rumpfteil in Verbindung stehenden Entkopplungsstrang (11) zusammenwirkt und eine Stelle (31) des Ausziehstranges (12) lösbar an die Last (2) ankoppelt, so dass das Stabilisierungs-Geschirr (14) in einem entspannten Zustand gehalten wird, wobei durch Lösen des Entkopplungs-Stranges (11) von der Last (2) der Ausziehstrang (12) an seiner Befestigungsstelle freigegeben wird, so dass aufgrund der Luftkräfte das Stabilisierungs-Geschirr (14) zusammen mit dem gesamten Ausziehstrang (12) in einen gespannten Zustand gelangt.

6. Lastenabsetz-System (1) nach einem der voranstehenden Patenansprüche, **dadurch gekennzeichnet, dass** der vorbestimmte Winkel, der durch die vertikale Achse der Last (2) relativ zur Längserstreckung des ausgezogenen Ausziehstranges (12; 12a, 12b) aufgespannt ist, zwischen 40 und 60 Grad liegt.

7. Lastenabsetz-System (1) nach einem der voranstehenden Patenansprüche, **dadurch gekennzeichnet, dass** ein weiterer Hilfsschirm (8) zwischen dem Hilfsschirm (7) und dem Lastenschirm (2) angeordnet ist, wobei der Hilfsschirm (7) über eine Soll-Trennstelle (13) im Ausziehstrang (12) aufgrund der Luftkräfte von dem weiteren Hilfsschirm (8) entkoppelbar ist.

8. Lastenabsetz-System (1) nach einem der voranstehenden Patenansprüche, **dadurch gekennzeichnet, dass** eine Steuereinheit (5) lösbar an der Last oder der Lastaufnahme-Vorrichtung angeordnet ist und dass eine weitere Auslöse-Einrichtung (21) zur Freigabe von Befestigungsmitteln (32b) vorhanden ist, um das Lösen der Steuereinheit (5) zu bewirken, wodurch die Last (2) über eine entsprechende Aufhänge-Vorrichtung (70) an der Steuereinheit (5) hängt.

9. Verfahren zum Stabilisieren eines aus einem Flugzeug abzusetzenden Lastenabsetz-Systems mit einer Last (2) oder einer Lastaufnahme-Vorrichtung (3), mit einem Lastenschirm (6) und mit einem Hilfsschirm (7), der mittels zumindest eines Ausziehstranges (12; 12a, 12b) mit dem Lastenschirm (6)verbunden ist,
**dadurch gekennzeichnet,**
- **dass** ein Hilfsschirm aus dem Flugzeug abgesetzt wird,
- **dass** eine erste Auslöse-Einrichtung (30, 31) betätigt wird, um ein mit dem Ausziehstrange (12) in Verbindung stehendes Stabilisierungs-Geschirr (14) unter dem Einfluss der Luftkräfte in einem gespannten Zustand zu bringen, wodurch in einer Flugphase nach Absetzen der Last (2) oder der Last-Aufnahmevorrichtung (3) letztere in einer vorbestimmten Lage relativ zum durch die Luftkräfte ausgezogenen Ausziehstrang (1 2; 12a, 12b) stabilisiert wird, indem das Stabilisierungs-Geschirr (14) zusammen mit dem Ausziehstrang (12;12a,12b) die durch die Luftkräfte an der Last (2) oder der Lastaufnahme-Vorrichtung (3) auftretenden Drehmomente aufnimmt und den Winkel, der durch die vertikale Achse der Last (2) relativ zur Längserstreckung des aufgrund der Luftkräfte nach dem Absetzen ausgezogenen Ausziehstranges (12; 12a, 12b) auftritt, in einem vorbestimmten Winkelbereich hält,
- **dass** eine zweite Auslöse-Einrichtung (20) zur Lösung des Stabilisierungsgeschirrs (1 4;14a,14b) betätigt wird,
- **dass** eine dritte Auslöse-Einrichtung (40) betätigt wird, um die Entfernung des gepackten Lastenschirms (6) von der Last (2) zu bewirken, so dass die Last (2) an einer Aufhänge-Vorrichtung (60) am Lastenschirm (6) hängt.

## Claims

1. A load-dropping system (1), comprising a load (2) or a load-holding device (3), a load parachute (6) and an auxiliary parachute (7) which is connected to the load parachute (6) by means of at least one extraction line (12; 12a, 12b), **characterised in that**
- a stabilisation harness (14; 14a, 14b) for connecting a junction point (18) of the extraction line (12; 12a, 12b) to a fastening means (16) on the load (2) or on the load-holding device (3) is present, which stabilisation harness (14; 14a, 14b) is so arranged on the load (2) or the load-holding device (3) that, in the tensioned state in a flight phase after dropping of the load (2) or the load-holding device (3), the latter is stabilised in a predetermined position relative to the extraction line (12; 12a, 12b), which is pulled out by the aerodynamic forces, the stabilisation harness (14; 14a, 14b) absorbing the turning moments acting on the load (2) or the load-holding device (3) as a result of the aerodynamic forces and maintaining the angle formed by the vertical axis of the load (2) relative to the longitudinal extent of the extraction line (12; 12a, 12b), which is pulled out as a result of the aerodynamic forces after the drop, within a predetermined angular range,
- a first trigger device (20) for releasing the stabilisation harness (14; 14a, 14b) is provided, and
- a second trigger device (40) is provided for releasing the load parachute (6) from the load (2), so that the load (2) is suspended from the load parachute (6) by a suspension device (60).

2. A load-dropping system (1) according to Claim 1, **characterised in that** the first and second trigger devices are actuated by attainment of a predetermined tension in the extraction line (12, 12a, 12b) and by means of time-delay devices.

3. A load-dropping system (1) according to Claim 1 or 2, **characterised in that** the time-delay device of the first trigger device (20, 21) is so adjusted that the release of the stabilisation harness takes place within a time interval from 2 to 6 seconds after attainment of the predetermined tension in the extraction line (12; 12a, 12b).

4. A load-dropping system (1) according to any one of the preceding claims, **characterised in that** the time-delay device of the second trigger device (40) is so adjusted that opening of the load parachute takes place within a time interval from 3 to 12 seconds after attainment of the predetermined tension in the extraction line (12; 12a, 12b).

5. A load-dropping system (1) according to any one of the preceding claims, **characterised in that** there is provided an uncoupling device (30) which cooperates with an uncoupling line (11) connected to a part of the aircraft fuselage and couples a point (31) of the extraction line (12) detachably to the load (2), so that the stabilisation harness (14) is maintained in an untensioned state, the extraction line (12) being released at its fastening point by release of the uncoupling line (11) from the load (2), so that the stabilisation harness (14) together with the whole extraction line (12) reaches a tensioned state as a result of the aerodynamic forces.

6. A load-dropping system (1) according to any one of the preceding claims, **characterised in that** the predetermined angle which is formed by the vertical axis of the load (2) relative to the longitudinal extent of the pulled-out extraction line (12; 12a, 12b) is from 40 to 60 degrees.

7. A load-dropping system (1) according to any one of the preceding claims, **characterised in that** a further auxiliary parachute (8) is arranged between the auxiliary parachute (7) and the load parachute (2), the auxiliary parachute (7) being uncouplable from the further auxiliary parachute (8) via a predetermined separation point (13) in the extraction line (12).

8. A load-dropping system (1) according to any one of the preceding claims, **characterised in that** a control unit (5) is arranged detachably on the load or the load-holding device and that a further trigger device (21) is present for the release of fastening means (32b) in order to effect the release of the control unit (5), whereby the load (2) is suspended from the control unit (5) via a corresponding suspension device (70).

9. Method for stabilising a load-dropping system to be dropped from an aircraft, comprising a load (2) or a load-holding device (3), a load parachute (6) and an auxiliary parachute (7), which is connected to the load parachute (6) by means of at least one extraction line (12; 12a, 12b), **characterised in that**
- an auxiliary parachute is dropped from the aircraft,
- a first trigger device (30, 31) is actuated in order to bring a stabilisation harness (14) connected to the extraction line (12) into a tensioned state under the influence of the aerodynamic forces, whereby, in a flight phase after dropping of the load (2) or the load-holding device (3), the latter is stabilised in a predetermined position relative to the extraction line (12; 12a, 12b), which is pulled out by the aerodynamic forces, the stabilisation harness (14) together with the extraction line (12; 12a, 12b) absorbing the turning moments arising as a result of the aerodynamic forces on the load (2) or the load-holding device (3) and maintaining the angle formed by the vertical axis of the load (2) relative to the longitudinal extent of the extraction line (12; 12a, 12b), which is pulled out as a result of the aerodynamic forces after the drop, within a predetermined angular range,
- a second trigger device (20) for releasing the stabilisation harness (14; 14a, 14b) is actuated,
- a third trigger device (40) is actuated in order to effect distancing of the packed load parachute (6) from the load (2), so that the load (2) is suspended from the load parachute (6) by a suspension device (60).

## Revendications

1. Système d'aérolargage (1) comprenant une charge (2) ou un dispositif porte-charge (3), un parachute de charge (6) et un parachute auxiliaire (7) relié au parachute de charge (6) par au moins une corde d'extraction (12 ; 12a, 12b),
**caractérisé**
- **en ce qu'**un harnais de stabilisation (14 ; 14a, 14b) relie un point de liaison (18) prévu sur la corde d'extraction (12 ; 12a, 12b) avec un moyen de fixation (16) sur la charge (2) ou sur le dispositif porte-charge (3), ce harnais de stabilisation étant disposé sur la charge (2) ou sur le dispositif porte-charge (3) de telle sorte que, dans l'état tendu dans une phase de vol après largage de la charge (2) ou du dispositif porte-charge (3), cette dernière ou ce dernier est stabilisé(e) dans une position préalablement déterminée par rapport à la corde d'extraction (12; 12a, 12b) extraite par les forces aérodynamiques, le harnais de stabilisation et la corde d'extraction (12 ; 12a, 12b) absorbant les couples de rotation produits par les forces aérodynamiques au niveau de la charge (2) ou du dispositif porte-charge (3) de façon à maintenir l'angle entre l'axe vertical de la charge (2) et la ligne de la corde d'extraction (12 ; 12a, 12b) extraite par les forces aérodynamiques après le largage dans une plage angulaire préalablement déterminée ;
- **en ce qu'**un premier dispositif de déclenchement (20) est prévu pour détacher le harnais de stabilisation (14 ; 14a, 14b) ; et
- **en ce qu'**un deuxième dispositif de déclenchement (40) est prévu pour libérer le parachute de charge (6) de la charge (2) de sorte que la charge (2) soit suspendue à un dispositif de suspension (60) du parachute de charge (6).

2. Système d'aérolargage (1) selon la revendication 1, **caractérisé en ce que** les premier et second dispositifs de déclenchement sont activés dès que la tension de traction au niveau de la corde d'extraction (12 ; 12a, 12b) atteint une valeur préalablement définie et **en ce qu'**ils sont actionnés par l'intermédiaire de dispositifs de temporisation.

3. Système d'aérolargage (1) selon la revendication 1 ou 2, **caractérisé en ce que** le dispositif de temporisation du premier dispositif de déclenchement (20, 21) est réglé de sorte que le détachement du harnais de stabilisation se fait dans un intervalle de temps compris entre 2 et 6 secondes après l'instant où la corde d'extraction (12, 12a, 12b) atteint la tension de traction préalablement définie.

4. Système d'aérolargage (1) selon l'une quelconque des revendications précédentes, **caractérisé en ce que** le dispositif de temporisation du deuxième dispositif de déclenchement (40) est réglé de sorte que l'ouverture du parachute de charge (6) se fait dans un intervalle de temps compris entre 3 et 12 secondes après l'instant où la tension de traction de la corde d'extraction (12 ; 12a, 12b) atteint la valeur de déclenchement préalablement définie.

5. Système d'aérolargage (1) selon l'une quelconque des revendications précédentes, **caractérisé en ce qu'**un dispositif de désaccouplement (30) est prévu qui coopère avec une corde de désaccouplement (11) reliée à un élément du fuselage de l'aéronef et assurant l'accouplement temporaire entre un point (31) de la corde d'extraction (12) et la charge (2) de sorte que le harnais de stabilisation (14) soit maintenu dans un état détendu, le détachement de la corde de désaccouplement (11) de la charge (2) libérant la corde d'extraction (12) au niveau de son point de fixation de sorte que le harnais de stabilisation (14) soit tendu avec l'ensemble de la corde d'extraction (12) sous l'effet des forces aérodynamiques.

6. Système d'aérolargage (1) selon l'une quelconque des revendications précédentes, **caractérisé en ce que** l'angle préalablement déterminé entre l'axe vertical de la charge (2) et la ligne de la corde d'extraction (12 ; 12a, 12b) tendue se situe entre 40 et 60°.

7. Système d'aérolargage (1) selon l'une quelconque des revendications précédentes,
**caractérisé en ce qu'**un parachute auxiliaire supplémentaire (8) est disposé entre le parachute auxiliaire (7) et le parachute de charge (2) le parachute auxiliaire (7) pouvant être désaccouplé du parachute auxiliaire supplémentaire (8) au niveau d'un point de séparation nominal (13) prévu dans la corde d'extraction (12) sous l'effet des forces aérodynamiques.

8. Système d'aérolargage (1) selon l'une quelconque des revendications précédentes, **caractérisé en ce que** une unité de commande (5) est disposée de manière amovible sur la charge ou sur le dispositif porte-charge et **en ce qu'**un autre dispositif de déclenchement (21) assurant la libération de moyens de fixation (32b) est prévu afin de à déclencher le détachement de l'unité de commande (5) pour suspendre la charge (2) sur l'unité de commande (5) par l'intermédiaire d'un dispositif de suspension (70) approprié.

9. Méthode de stabilisation d'un système d'aérolargage à partir d'un aéronef, ce système comprenant une charge (2) ou un dispositif porte-charge (3), un parachute de charge (6) et un parachute auxiliaire (7) relié au parachute de charge (6) par au moins une corde d'extraction (12 ; 12a, 12b),
**caractérisé**
- **en ce qu'**un parachute auxiliaire est largué de l'aéronef,
- **en ce qu'**un premier dispositif de déclenchement (30, 31) est actionné pour tendre un harnais de stabilisation (14) relié à la corde d'extraction (12) sous l'effet des forces aérodynamiques de façon à stabiliser, dans une phase de vol après largage de la charge (2) ou du dispositif porte-charge (3), cette dernière ou ce dernier dans une position préalablement déterminée par rapport à la corde d'extraction (12 ; 12a, 12b) extraite par les forces aérodynamiques, le harnais de stabilisation (14) et la corde d'extraction (12 ; 12a, 12b) absorbant les couples de rotation produits par les forces aérodynamiques au niveau de la charge (2) ou du dispositif porte-charge (3) et maintenant l'angle entre l'axe vertical de la charge (2)
